# EUROPÄISCHE PATENTSCHRIFT

(11) **EP 0 912 423 B1**
(45) Veröffentlichungstag und Bekanntmachung des Hinweises auf die Patenterteilung: **29.03.2000**
(21) Anmeldenummer: 97930495.3
(22) Anmeldetag: 03.07.1997
(51) Int. Cl.: B65D 90/24, H02B 7/00

(54) **KONTROLLSYSTEM FÜR ZWEI EINANDER DICHT ZUGEORDNETE, VONEINANDER LÖSBARE TEILE**
CONTROL SYSTEM FOR TWO PARTS THAT ARE TIGHTLY ASSEMBLED BUT DETACHABLE FROM EACH OTHER
SYTEME DE CONTROLE DE DEUX PARTIES ACCOLEES MAIS DETACHABLES

(30) Priorität: 08.07.1996 DE 29611767 U; 23.08.1996 DE 29614683 U; 29.11.1996 DE 29620778 U; 10.12.1996 DE 29621396 U
(43) Veröffentlichungstag der Anmeldung: 06.05.1999
(73) Patentinhaber: Kress, Hansjörg, 79331 Teningen (DE)
(72) Erfinder: Kress, Hansjörg, 79331 Teningen (DE)
(74) Vertreter: Hiebsch, Gerhard F., Dipl.-Ing.
(86) Internationale Anmeldenummer: EP9703499
(87) Internationale Veröffentlichungsnummer: WO9801373

(56) Entgegenhaltungen:
- DE-C- 4 137 632
- US-A- 4 420 970
- US-A- 4 926 680
- US-A- 5 170 659

## Beschreibung

Die Erfindung betrifft ein Kontrollsystem für zwei einander dicht zugeordnete, voneinander lösbare Teile nach dem Oberbegriff des ersten Patentanspruches.

Die DE 41 37 632 C1 offenbart eine Auffangwanne aus Stahlblech, von deren Boden drei verschweißte Seitenwände aufragen. Die vierte Seitenwand setzt sich aus zwei -- mit Randflanschen anschließenden Seitenwände und eigenen Abwinkelungen -- einen Hohlraum begrenzenden Wandplatten zusammen, die unter Zwischenschaltung von Dichtungen an den Stößen zwischen den Wandteilen verschraubt sind; die Schrauben können die Dichtungen durchsetzen und pressen sie -- den Hohlraum dichtend -- zusammen. Die äußere Wandtafel ist mit einem Anschlußstutzen für ein Strömungsmittel -- z.B. Wasser oder Druckluft -- ausgestattet. Füllt letzteres den Hohlraum, kann etwa durch Abseifen in den Dichtungsbereichen eine Prüfung erfolgen, ob die lösbare Seitenwand gas- oder flüssigkeitsdicht in die Auffangwanne integriert ist.

Der US-A 4 420 970 ist ein Kontrollsystem mit zwischen Endflanschen von Metallrohren vorgesehenem scheibenförmigem Isolierelement zu entnehmen; letzteres ist zu den beiden Endflanschen hin mit jeweils einer Ringnut zur Aufnahme eines Paares von O-Ringen versehen. Diese Ringnut bildet einen von den O-Ringen begrenzten Hohlraum, der mittels einer zur Rohrachse parallelen Kanal an eine Radialbohrung angeschlossen ist. Diese ist durch eine Schraube verschlossen und dient nach deren Wegnahme zur Leckageentnahme.

Die Schrift zu DE 92 02 421 U beschreibt eine Auffangwanne mit dem Wannenboden innenseitig zugeordneten Führungeprofilen für den Transformator, der im Transformatorenhäuschen auf Laufschienen steht, um das Einbringen oder Auswechseln des Transformators zu vereinfachen bzw. Unterschiede zwischen dem Gehäuseboden und der Oberfläche des die Station umgebenden Erdreiches auszugleichen. Bei solchen vorbekannten Auffangwannen entspricht der Abstand der Führungsprofile voneinander dem Abstand der gebäudeseitigen Laufschienen, die beim Einbringen der Auffangwanne in das Gebäude als Tragelemente für die dann auf ihnen aufliegende Auffangwanne zu dienen vermögen. Dies soll vor allem das Nachrüsten bereits bestehender Gebäude ermöglichen. Die Frontwand der Auffangwanne ist abnehmbar und wird unter Zwischenschaltung eines Dichtungsstreifens flüsigkeitsdicht an einem Anschlagsrand der Auffangwanne angeschraubt.

Derartige Auffangwannen aus Stahl mit Sicherheitsflansch haben sich besonders bei der Sanierung alter Trafostationsgebäude mit wannenlosen Transformatoren bewährt. Jedoch sind solche Auffangwannen mit Flansch für den Einsatz in Wasserschutzgebieten im allgemeinen nicht zugelassen, da eine Kontrolle der Dichtung über eine längere Standzeit nicht möglich ist; die Beanspruchung der Dichtung erfolgt nur im Havariefall, also unter Umständen nach Jahrzehnten.

Die "Anforderungen an Auffangwannen aus Stahl..." der Länderarbeitsgemeinschaft Wasser (LAWA) vom 22.6.1992 (GABL. 1992, S. 583-587) erwähnen flüssigkeitsdichte Bauteile aus Stahl zur Aufnahme und Rückhaltung wassergefährdender Stoffe, die u. a. so konstruiert sein müssen, daß der Unterboden auf Korrosion überprüft werden kann und deren Einzelteile verschweißt sein müssen; Schraubverbindungen mit Dichtungen seien unterhalb des maximal möglichen Flüssigkeitsspiegels in der Auffangwanne unzulässig.

In Kenntnis dieses Standes der Technik hat sich der Erfinder das Ziel gesetzt, derartige Behältnisse oder Auffangwannen konstruktiv zu verbessern und den Einsatz abtrennbarer oder lösbarer -- abgedichteter -- Wannenteile ohne Beschränkung zu ermöglichen. Darüber hinaus soll ein dichtes Verbindungssystem geschaffen werden, das auch bei anderen zu verbindenden Paarungen von Vorrichtungsteilen eingesetzt zu werden vermag.

Zur Lösung dieser Aufgabe führt die Lehre des unabhängigen Anspruches; die Unteransprüche geben günstige Ausgestaltungen an.

Erfindungsgemäß sind wenigstens zwei im möglichen Strömungsweg für Behälterinhalt in Abstand hintereinander liegende Dichtprofile vorgesehen und die Kontrollkammer ist an eine Drucküberwachungseinrichtung angeschlossen. Mit diesem erfindungsgemäßen System ist auch eine Durchgangsprüfung mehrerer hintereinander gekoppelter Dichtungsbereiche möglich.

Die im gedachten Strömungsweg des austretenden Behältnis- oder Wanneninhalts liegende Kontrollkammer ist mit einem Strömungsmedium gefüllt, bevorzugt mit einer bei unerwünschtem Austritt aus dem Prüfraum durch Sichtkontrolle leicht überwachbaren Kontrollflüssigkeit oder aber mit einem Gas; die Füllung des Prüfraumes bzw. der Kontrollkammer kann durch eintsprechende Meßgeräte druckkontrolliert und so Leckage festgestellt werden.

Obwohl Dichtungen unterschiedlichster Ausgestaltung, also auch Klebedichtungen, zum erfindungsgemäßen Einsatz herangezogen werden können, haben sich jene erwähnten, im möglichen Strömungsweg --insbesondere zwei-- in Abstand hintereinander liegenden Dichtprofile als günstig erwiesen Von diesen soll eines -- oder auch beide -- von einem den lösbaren Behälterteil und den der Kontrollkammer zugeordneten Abschnitt des Auffangbehälters verbindenden Schraubbolzen od. dgl. Verbindungsorgan durchsetzt sein. Ist durch letzteres nur eines der Dichtungsprofile berührt, wird das andere durch eine Endkante des Auffangbehälters an den lösbaren Behälterteil gepreßt.

Auch ist es möglich, daß jedes der Dichtungsprofile zwischen zwei durch eine Schraubverbindung zueinandergeführten parallelen Flächen des Behälterteils bzw. Auffangbehälters dichtend gehalten wird.

Nach einem weiteren Merkmal der Erfindung können auch beide im möglichen Strömungsweg für den Behälterinhalt in Abstand hintereinander liegende Dichtungsprofile jeweils von einer Endkante klemmend gehalten werden, nämlich das eine von einer Endkante des lösbaren Behälterteils und das andere von einer Endkante des Auffangbehälters; als Widerlager dient dabei der jeweils andere Partner, also beispielsweise der Auffangbehälter für das von der Endkante des lösbaren Behälterteils berührte Dichtprofil.

Im übrigen entsteht diese Endkante durch das Abkanten einer Hakenleiste um mehr als 90° aus der Fläche des lösbaren Teiles bzw. des Anschlagabschnittes des Auffangbehälters.

Eine vorteilhafte Ausgestaltung des Verbindungsbereiches zur Bildung der erfindungsgemäßen Kontrollkammer zeichnet sich dadurch aus, daß die Hakenleiste von einem Klemmprofil übergriffen und mit diesem an dem jeweils anderen Partner der Verbindung festgelegt ist. Dieses Klemmprofil kann durch einen einseitigen Stützsteg in Abstand von der Fläche seines Befestigungspartners gehalten sowie an diesen durch zumindest eine Schraubverbindung angeschlossen werden; es entsteht so eine sich federnd nachspannende Festlegung jener Hakenleiste . Das Anpressen des lösbaren Behälterteils oder Flanschdeckels erfolgt hier dank des Klemmprofils durch außerhalb der Dichtung aufgeschweißte Gewindestifte, so daß das Dichtprofil selbst ohne Lochung verwendet werden kann.

Das Dichtungsprofil kann im Rahmen der Erfindung als Rundprofil oder Dichtungsschnur ausgebildet sein; die beiden Rundprofile sind durch ein beispielsweise rinnenartiges Zwischenprofil aus einem die Distanzhaltung der Rundprofile gewährleistenden Werkstoff paarweise zueinander in Abstand gehalten. Außenseitig liegen die Rundprofile jeweils einem Klemmprofil an, welche bevorzugt L-förmig gebogen und von einem Schraubbolzen an der Wanne gehalten ist.

Insgesamt hat es sich als günstig erwiesen, die Befestigungsbereiche beider Partner zum Herstellen jenes die Kontrollkammer enthaltenden, die Dichtungsprofile aufnehmenden Spaltes so zu gestalten, daß sowohl der lösbare Behälterteil als auch der Abschnitt des Auffangbehälters im Verbindungsbereich unter Bildung jeweils einer Anschlußfläche bzw. einer Seitenfläche sowie einer daran anschließenden Flankenfläche bzw. eines Anschlagstreifens zweifach abgekantet ist; die Flankenfläche sowie die Seitenfläche sollen die Kontrollkammer bzw. den Prüfraum -- in Abstand zueinander etwa parallel stehend -- begrenzen.

Statt eines Paares von Dichtprofilen kann im Rahmen der Erfindung auch nur ein einziger Dichtungsstreifen größerer Breite eingesetzt werden; dieser wird im Verbindungsbereich zwischen parallele Flächen des lösbaren Behälterteils sowie des zugeordneten Abschnitts des Auffangbehälters eingelegt; in seine beiden Oberflächen ist zumindest eine Nut eingeformt, die von dem sie überspannenden Teil des Verbindungsbereiches zur Kontrollkammer dicht verschlossen wird.

In einer Ausgestaltung des Dichtungsstreifens verläuft beidseits seiner Längsachse in einer Oberfläche jeweils zumindest eine Nut, die mit einer entsprechenden Nut der anderen Streifenoberfläche durch wenigstens einen Durchbruch zu einem kommunizierenden Kontrollsystem verbunden ist. Dabei soll die Bodenbreite der querschnittlich trapezförmigen Nut -- mit einem Neigungswinkel ihrer Wände von etwa 45° -- etwa einem Zehntel bis einem Viertel der Breite des Dichtungsstreifens entsprechen, also beispielsweise 5 mm messen. Der Dichtungsstreifen ist in diesem Falle in seiner Längsachse und außerhalb jener Nuten von den Schraubelementen durchsetzt; die erwähnten kommunizierenden Kontrollsyteme liegen -- voneinander getrennt -- an beiden Seiten des Schraubenbereiches.

Ein anderer erfindungsgemäßer Dichtungsstreifen bietet an jeder seiner Oberflächen eine fast deren gesamte Breite einnehmende Nut an, von deren Nutboden an Durchbrüchen für die Schraubbolzen Anformungen aufragen, die querschnittlich mit den Nutwänden -- die Nut parallel zu deren Längsachse fortsetzende -- Nutkanäle begrenzt. Zudem sollen die Oberflächen der Anformungen mit der Oberfläche des Dichtungsstreifens fluchten, um die Abdichtung jener Durchbrüche zu gewährleisten.

Vorteilhafterweise soll zwischen zwei Anformungen und nahe einer Nutwand ein Durchbruch vorgesehen werden, der die beiden Nuten des Dichtungsstreifens miteinander verbindet und so eine einheitliche Kontrollkammer schafft.

Um die erwähnten Kontrollgeräte ansetzen zu können, soll zumindest einem dieser Verbindungsdurchbrüche des Dichtungsstreifens eine Bohrung in dem benachbarten Bereich des Auffangbehälters zugeordnet sein.

Als günstig hat sich eine Ausgestaltung des Dichtungsprofils erwiesen, die aus zwei von einem Steg verbundenen Rundprofilen besteht; hier begrenzt jede der Stegseiten eine Kontrollkammer, die anderseits von einem aufgesetzten Teil -- etwa einer Betonwand -- überspannt ist.

Bevorzugt werden hier zwei von einem einstückig angeformten Zwischensteg verbundene Hohlstränge aus elastischem Werkstoff.

Erfindungsgemäße Dichtungsprofile können durch Klebestöße verlängert werden. Zu deren Dichtheitsüberwachung kann in der Klebezone ein beide Profiloberflächen verbindender Durchbruch vorgesehen werden, der bevorzugt im Bereich eines Nutenpaares mit gemeinsamer Mittelachse verläuft.

Nach einem anderen Merkmal der Erfindung ist zwischen zwei einander zugeordneten plattenartigen Teilen ein Dichtstreifen mit einer durchgehenden nutartigen Ausnehmung oder einer Reihe von polygonen oder runden Ausnehmungen eingelegt, und den Ausnehmungen ist wenigstens ein rinnenartiger Bodenwulst der/des plattenartigen Teile/s zugeordnet, wobei sich der Rinnenraum zu der/den Ausnehmung/en hin öffnet und die Kontrollkammer begrenzt.

Ein solcher Dichtstreifen kann von einem Zwischenboden oder einer Gittereinlage durchgriffen sein.

Auch liegt im Rahmen der Erfindung eine tellerartige Dichtscheibe mit wenigstens einer Ringnut und/oder einer ringartigen Anordnung runder oder polygoner Ausnehmungen.

Die Dichtscheibe kann zudem einen zentrischen Durchbruch aufweisen, der besonders dann von Bedeutung ist, wenn der Dichtscheibe zumindest einerseits ein Flansch eines Hohlprofils zugeordnet ist, dessen Hohlraum dann an den zentrischen Durchbruch anschließt.

Zudem können Plattenpaarungen allgemeiner Art unter Zwischenfügung der Dichtscheibe verbunden werden; dabei ist es möglich, die Dichtscheibe und die Platten durch einen zweiteiligen mutterartigen Einsatz zusammenzufügen, der jenen zentrischen Durchbruch durchsetzt. Ein Teil des mutterartigen Einsatzes greift bevorzugt mit einem Gewindekragen in eine von einem Gewindekragen des anderen Teiles begrenzte Gewindenut ein.

Im Rahmen der Erfindung liegt auch die Möglichkeit, Behälter -- beispielsweise eine Auffangwanne -- aus mehreren überlappenden Teilen zusammenzusetzen; dann sind im Überlappungsbereich jene Kontrollkammern untergebracht, vorteilhafterweise als Einformung in einem der Behälterböden bzw. -seiten. Auch ist es möglich, mit dem erfindungsgemäßen Verbindungsbereich zwei benachbarte Behälter -- etwa Auffangwannen -- miteinander dicht zu einer Einheit zu verbinden.

Von Bedeutung ist auch, daß die Kontrollkammer bzw. der Prüfraum im Falle einer Undichtigkeit mit einem Dichtungsspray, welches die Dichtigkeit wieder herstellt -- ähnlich einem Reifenreparaturset -- gefüllt werden kann.

Wird die Überprüfung der Dichtigkeit über Unterdruck realisiert, hat es sich als günstig erwiesen, mittels einer Verstärkung des Unterdruckes und der damit verbundenen Verstärkung des Anpreßdruckes auf die Dichtung eine Notdichtfunktion hervorzurufen.

Zur Vergrößerung der Auffangfläche kann zudem an wenigstens eine Wandung des Auffangbehälters eine Einlauffläche angeschlossen sein, die mit einem Neigungswinkel von beisielsweise 40° auf den Behälterrand aufgesteckt wird. Diese Einlauffläche soll außerhalb des Behälterrandes mit einem Seitenrand sowie -- zur Festlegung am Behälterrand -- mit einem Endwinkel ausgestattet sein. Ein Stützprofil zwischen der Wandung des Auffangbehälters sowie der Einlauffläche sichert deren Lage.

Durch Steckbleche dieser Art oder auf andere einfache Weise besteht erfindungsgemäß die Möglichkeit, aus mehreren Teilwannen ein größeres Wannensystem zu realisieren. In diesem Fall befinden sich Dichtungen unterhalb des maximalen Füllstandes.

Für die erörterten Merkmale wird -- wie gesagt -- gesondert Schutz auch dann begehrt, wenn sie in anderen Bereichen als dem der Auffangwanne für Transformatorenflüssigkeit zur Anwendung gelangen, beispielsweise bei einem Einsatz an Druckbehältern, wie sie bei sogenannten SF6-Schaltanlagen vorhanden sind.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in:
- Fig. 1:: eine Schrägsicht auf eine Auffangwanne für verunreinigende Flüssigkeit, insbesondere für Isolierflüssigkeit eines Transformators der Energiewirtschaft;
- Fig. 2 bis Fig. 4:: gegenüber Fig. 1 vergrößerte Querschnitte nach deren Linie II - IV durch unterschiedliche Ausgestaltungen des Anschlusses einer gesonderten Wand der Auffangwanne;
- Fig. 5, 7 bzw. 8, 10:: zwei andere Beispiele von Anschlüssen gesonderter Wandteile mit streifenartigen Dichtelementen dargestellt als Querschnitte durch Abschnitte der Auffangwanne, geschnitten etwa nach Linie V-V und VII-VII in Fig. 6 bzw. nach Linie VIII-VIII und X-X in Fig. 9;
- Fig. 6,9:: jeweils eine Draufsicht auf das in Fig. 5, 7 bzw. 8, 10 querschnittlich dargestellte Dichtelement;
- Fig. 11, 13, 15, 17, 18:: jeweils einen Querschnitt durch andere Ausgestaltungen von jeweils zwei Wandteilen mit zwischengeschaltenem Dichtelement;
- Fig. 12:: ein Querschnitt durch eine Auffangwanne;
- Fig. 14, 16:: jeweils einen Querschnitt durch die Dichtelemente der Fig. 13 bzw. 15;
- Fig. 19:: einen Teilquerschnitt durch zwei miteinander verbundene Auffangwannen;
- Fig. 20:: eine Schrägsicht auf eine Auffangwanne mit zugeordneten Vergrößerungen von Ausschnitten daraus;
- Fig. 21:: eine Schrägsicht auf ein Detail einer Auffangwanne;
- Fig. 22:: eine Schrägsicht auf ein Dichtelement;
- Fig. 23:: zwei Abschnitte einer Auffangwanne in Schrägsicht;
- Fig. 24:: eine Skizze zu einem Dichtelement in einer Betonfuge im Zusammenhang mit einer Auffangwanne;
- Fig. 25:: einen vergrößerten Ausschnitt aus Fig. 24;
- Fig. 26:: eine Draufsicht auf ein Dichtelement gemäß Fig. 25 mit zugeordnetem vergrößertem Querschnitt;
- Fig. 27:: eine andere Querschnittsform Ausführungsform des Dichtelements der Fig. 26;
- Fig. 28:: die Draufsicht auf ein bandartiges Dichtelement mit Klebestoß zwischen zwei Teilen des Dichtelements;
- Fig. 29:: einen Querschnitt durch das Dichtelement der Fig. 28 nach deren Linie XXIX-XXIX;
- Fig. 30:: Seitenansichten dreier Dichtelemente mit unterschiedlichen Ausführungen ihres Klebestoßes;
- Fig. 31, 32:: zwei Teillängsschnitte durch Auffangwannen aus einander überlappenden und miteinander verklebten Wannenteilen;
- Fig. 33, 34:: Schrägsichten auf verschiedene Klebeoder Dichtungsbereiche;
- Fig. 35 bis 40:: Dichtstreifen unterschiedlicher Formgebung in Schrägsichten;
- Fig. 41, 42:: Querschnitte durch verschiedene Dichtstreifen;
- Fig. 43, 44, 49:: Schrägsichten auf jeweils eine Dichtscheibe;
- Fig. 45:: ein geschnittenes Anwendungsbeispiel zu Fig. 44;
- Fig. 46, 48:: andere Anwendungen jeweils in Schrägsicht;
- Fig. 47, 50:: eine Schnittfigur zu Fig. 46 bzw. 48;
- Fig. 51:: eine Schrägsicht auf eine weitere Anwendung;
- Fig. 52:: den Schnitt durch Fig. 51;
- Fig. 53, 54:: zwei Draufsichten auf Dichtscheiben mit Prüfkanälen.

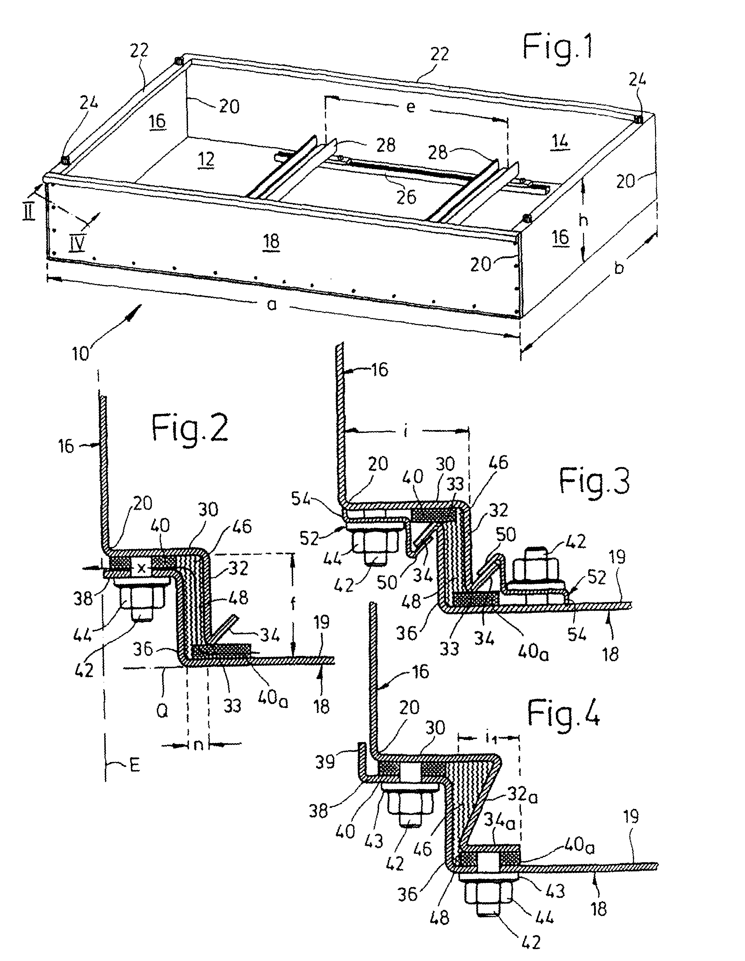

Eine in Fig. 1 erkennbare Auffangwanne 10 aus Metall, insbesondere aus Stahl, für Isolierflüssigkeiten dient vor allem dem Einsatz in -- aus Gründen der Übersichtlichkeit in der Zeichnung nicht wiedergegebenen -- Transformatorenstationen mit in Abstand zu deren Gebäudeboden verlaufenden sog. Trafolaufschienen; diese bilden Träger für einen Transformator und ruhen üblicherweise auf Halteprofilen. Letztere liegen an den Längswänden der Transformatorenstation.

Die Maße der Auffangwanne 10 sind den jeweiligen Gegebenheiten angepaßt. So kann beispielsweise die Länge a der Auffangwanne 10 für einen Transformator von 630 kVa 1800 mm betragen, bei einer Breite b von etwa 1200 mm und einer Höhe h von 350 mm, woraus sich ein Rauminhalt von etwa 0,71 m³ errechnet. Dieser reicht aus, um unerwünscht ausfließendes Transformatorenöl aufzufangen und festzuhalten.

Vom Wannenboden 12 aus Stahlblech einer Dicke von etwa 2 mm ragen -- in Fig. 1 jeweils abgekantet -- eine Rückwand 14 sowie zwei seitliche Wannenwände 16 auf. Die Frontwand 18 ist unter Zwischenschaltung noch zu beschreibender Dichtelemente flüssigkeitsdicht mit einer Anschlagfläche des Wannenbodens 12 bzw. der Wannen- oder Seitenwände 16 verschraubt.

Nahe den Wannenecken 20 sind auf einen abgekanteten Rand 22 der Wannenwände 16 Erdungspunkte 24 aufgesetzt. Diese können beim Transport als Verankerungen für Zurrgurte od. dgl. dienen.

Parallel zur Frontwand 18 der Auffangwanne 10 verlaufen auf dem Wannenboden 12 zwei Distanzschienen 26 als Auflager für zwei nach oben offene Rinnenprofile 28, die in Abstand zur Rückwand 14 der Auffangwanne 10 enden. Diese Rinnenprofile 28 nehmen als Führungsschienen Fahrrollen des Transformators auf, die seitlich von den Schenkeln der Rinnenprofile 29 gesichert sind; deren -- einstellbarer -- mittiger Abstand e voneinander entspricht also dem Querabstand jener Fahrrollen.

Die Fig. 2 bis 4 verdeutlichen Ausgestaltungen des Anschlusses der Frontwand 18 an die Wannenwand 16, aus deren Ebene E eine zur Frontwand 18 parallele Anschlagfläche 30 der Länge i, eine anschließende -- in Fig. 2,3 zur Wannenwand 16 parallele -- Flankenfläche 32 sowie eine endwärtige Hakenleiste 34 herausgeformt sind; die Flankenfläche 32ₐ der Ausführung in Fig. 4 ist zur Ebene E hin gewinkelt, ihre Hakenleiste 34ₐ der Länge i₁ parallel zur Anschlagfläche 30 gestellt, wohingegen die Hakenleiste 34 der Fig. 2,3 um etwa 45° zum Wanneninnenraum hin weisen.

Aus der Ebene Q der Frontwand 18 ist rechtwinkelig eine Seitenfläche 36 herausgebogen und aus dieser in Fig. 2,4 eine zur Ebene Q paralleler Anschlagstreifen 38, der in Einbaustellung mit der daran ebenfalls parallelen Anschlagfläche 30 der Seitenwand 16 -- unter Zwischenschaltung eines Dichtprofils 40 rechteckigen Querschnitts -- durch einen einends angeschweißten Schraubbolzen 42 verbunden ist; dieser trägt an der Außenfläche des Anschlagstreifens 38 eine Schraubmutter 44 mit Unterlagscheibe 43.

Die in einem lichten Abstand n zur Seitenfläche 36 der Frontwand 18 stehende Flankenfläche 32 der Wannenwand 16 preßt mit ihren durch Abkantung der Hakenleiste 34 entstehenden Druckkante 33 ein weiteres Dichtprofil 40ₐ an die Innenfläche 19 der Frontwand 18. Es entsteht eine -- in dem gedachten Strömungsweg x (Fig. 2) einer austretenden Flüssigkeit liegende -- von den beiden Dichtprofilen 40,40ₐ, der Flankenfläche 32 mit der Seitenfläche 36 begrenzte dichte Kammer 46 nahezu rechteckigen Querschnittes der erwähnten Breite n mit einer Höhe f, die etwa der Querschnittslänge der Flankenfläche 32 entspricht. Das Dichtungspaar 40,40ₐ führt zudem zu doppelter Sicherheit gegen Leckage.

Die Kammer 46 ist mit einem Strömungsmedium 48 gefüllt und stellt so eine Prüf- oder Kontrollkammer dar. Das Strömungsmedium kann eine Kontrollflüssigkeit sein oder ein Gas, dessen Überdruck überwacht wird.

Bei der Ausführung nach Fig. 3 endet die Seitenfläche 36 der Frontwand 18 an einer Druckkante 33, die in eine winkelig abgebogene Hakenleiste 34 übergeht. Jene Druckkante 33 preßt das -- hier ohne durch Schraubbolzen 42 bedingte Durchbrüche eingesetzte -- Dichtprofil 40 gegen die Anschlagfläche 30, die Hakenleiste 34 dient als Widerlager für einen Endhaken 50 eines gesonderten -- durchgehend oder in Abschnitten eingesetzten -- Klemmprofils 52, das sich mit einem Stütz- oder Längssteg 54 an der Innenfläche 19 der Frontwand 18 abstützt sowie durch den Schraubbolzen 42 bzw. dessen Schraubmutter 44 zur Innenfläche 19 hin gezogen wird. Dabei wird eine Federwirkung erzeugt.

Ein solches -- von einem Schraubbolzen 42 an der Innenfläche 19 der Frontwand 18 gehaltenes -- Klemmprofil 52 hintergreift mit seinem Endhaken 50 die Hakenleiste 34 der Flankenfläche 32. Die beschriebene Verbindungsstelle zwischen Wannenwand 16 und Frontwand 18 bietet beidseits der Kontrollkammer 46 eine gegenläufige Symmetrie seiner wesentlichen Halte- und Dichtelemente 33,34,40,42,50,52 an.

In Fig. 4 fehlt die Druckkante 33; hier sind beide Dichtprofile 40,40ₐ beidseits flächig belastet. Die Verbindung des -- hier mit einem zur Ebene E parallelen, das Dichtprofil 40 schützend übergreifenden Kantstreifen 39 versehenen -- Anschlagstreifens 38 mit der Anschlagfläche 30 entspricht jener in Fig. 2. Andernends der Kontrollkammer 46 wird das zweite Dichtprofil 40ₐ schützend durch die parallel zur Innenfläche 19 der Frontwand 18 verlaufende Hakenleiste 34ₐ der geneigten Flankenfläche 32ₐ an jene Innenfläche 19 gepreßt; die Hakenleiste 34ₐ trägt einen Schraubbolzen 42, der die Frontwand 18 durchsetzt.

Die zu Frontwand 18 sowie Wannenwand 16 beschriebenen Verbindungskonstruktionen können auch zwischen anderen Wannenteilen vorgesehen werden, etwa zwischen einer Wannenwand 16 und der Rückwand 14 oder dem Wannenboden 12 und einer der ihn umgebenden Wandelemente 14,16,18.

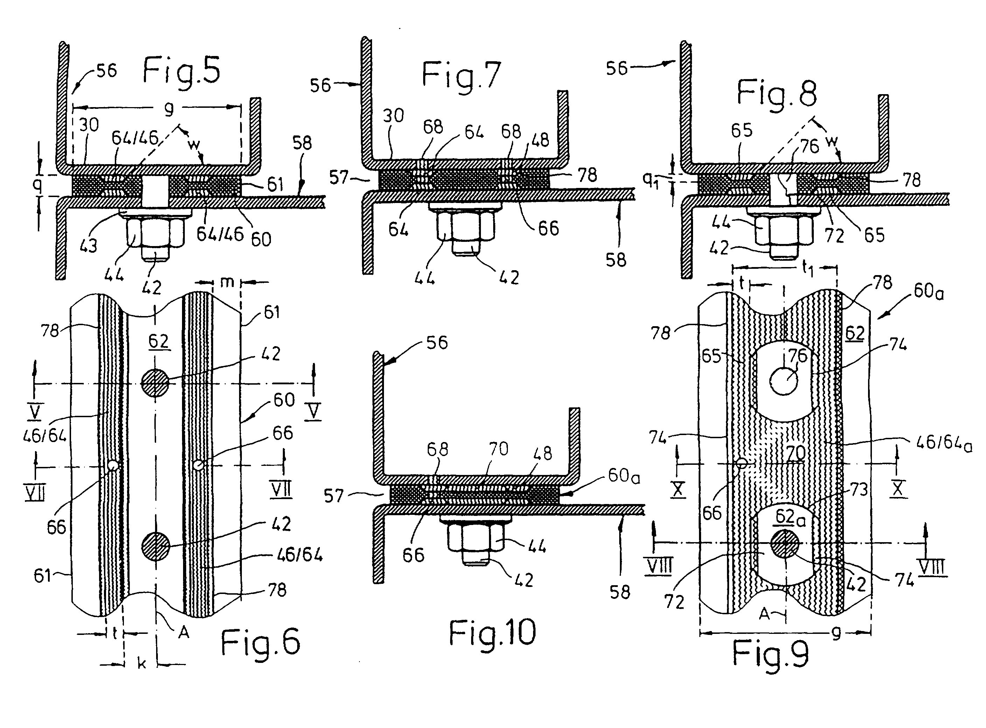

Eine weitere Ausgestaltung eines flüssigkeitsdichten Anschlusses zeigen Fig. 5 bis 7; zwischen zwei parallele Wandteile 56,58 ist in einen von diesen begrenzten Spalt 57 ein von -- an die Außenseite des Wandteils 30 angeschweißten -- Schraubbolzen 42 durchsetzter Dichtstreifen 60 der Dicke q eingelegt. In dessen beide Oberflächen 62 ist jeweils ein Paar paralleler Nuten 64 der Tiefe q₁ eingeformt, wobei jede Nut 64 an einer Seite der Streifenlängsache A verläuft - deren Abstände k zu den Nuten 64 sind an beiden Oberflächen ebenso gleich wie die Abstände m der Nuten 64 zu den Streifenlängskanten 61. Die Bodenbreite t des Nuttiefsten der querschnittlich trapezförmigen Nut 64 entspricht etwa 1/10 der Streifenbreite g, die Nutwandwinkel w betragen etwa 45°. Diese Nuten 64 bilden jeweils mit dem sie überdeckenden Wandteil 56 bzw. 58 eine Kontrollkammer 46 der zu Fig. 2 bis 4 beschriebenen Art.

Die jeweils übereinanderliegenden Nuten 64 einer Achsenseite sind mittels bohrungsartiger Durchbrüche 66 verbunden, und diese fluchten in Einbaustellung nach Fig. 7 mit Bohrungen 68 in der Anschlagfläche 30; die Durchbrüche 66 erzeugen eine einheitliche Kontrollkammer 46 aus zwei Nuten 64 und die Bohrungen 68 machen die Kontrollkammer für Füll- und Überwachungszwecke von außen her zugänglich.

Beim Ausführungsbeispiel der Fig. 8 bis 10 enthält der Dichtstreifen 60ₐ in jeder Oberfläche 62 eine einzige Nut 64ₐ, deren Bodenbreite t₁ mit beispielsweise 27 mm größer ist als die halbe Streifenbreite g von hier etwa 45 mm.

Innerhalb der Nut 64ₐ ragen vom Nutboden 70 inselartig scheibenförmige Anformungen 72 mit in Achsrichtung teilkreisförmigem Umfangsrand 73 auf, deren Oberfläche 62ₐ mit der Streifenoberfläche 62 fluchtet. Jene Umfangsränder 73 gehen in achsparallele Seitenwände 74 über, die Nutkänale 65 als Teil der breiten Nut 64ₐ begrenzen; der Querschnitt der Nutkanäle 65 entspricht jenem der Nuten 64 in Fig. 5 bis 7.

Die Anformungen 72 umfangen Durchbrüche 76 für jene Schraubbolzen 42 und dichten sie gegen die Kontrollkammer 46 ab, welche von der Nut 64ₐ und dem jeweils überspannenden Wandteil 56 bzw. 58 gebildet wird. Aus ihr führt gemäß Fig. 9,10 eine Bohrung 68 im Wandteil, die zwischen zwei der Anformungen 72 und nahe einer der äußeren Nutwände 78 angeordnet ist.

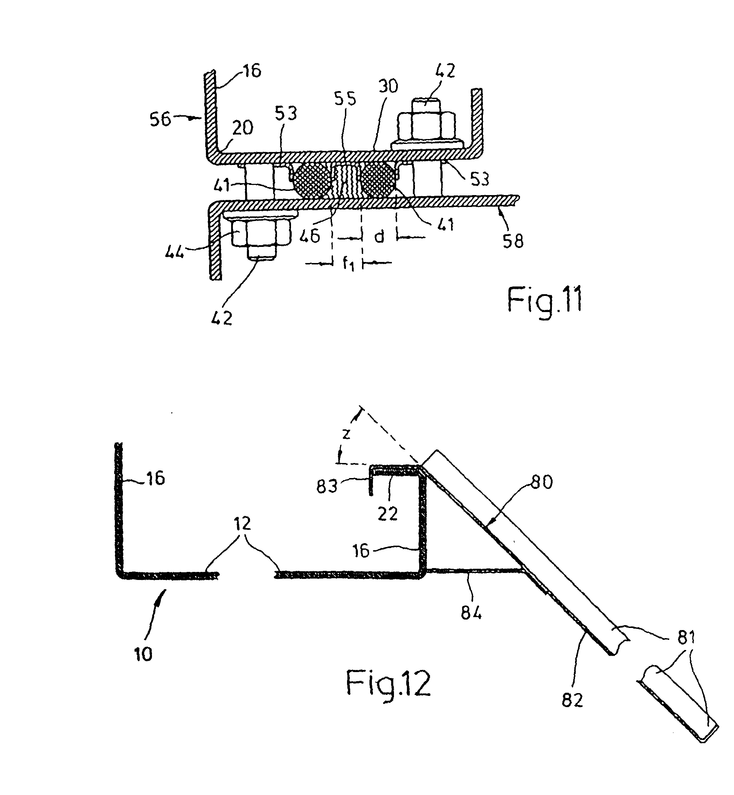

Fig. 11 zeigt zwischen den Wandteilen 56,58 zwei Dichtprofile 41 runden Querschnitts des Durchmessers d, die durch ein rinnenartiges Zwischenprofil 55, welches am Wandteil 56 festliegt, in Abstand f₁ voneinander gehalten sind und -- zusammen mit den angrenzenden Außenflächen jener Wandteile 56,58 -- die Kontrollkammer 46 begrenzen. An die runden Dichtprofile 41 schlägt jeweils außenseitig ein querschnittlich L-förmiges Klemmprofil 53 an, das von einem Schraubbolzen 42 durchsetzt wird.

Auf den Rand 22 der Auffangwanne 10 kann -- wie Fig. 12 verdeutlicht, in der die Distanzschienen 26 samt Rinnenprofilen 28 vernachlässigt sind -- ein Einlaufblech 80 mit Seitenwand 81 aufgesteckt werden, welches die Auffangfläche der Auffangwanne 10 vergrößert. Dieses Einlaufblech 80 verläuft in einem Neigungswinkel z von etwa 40° zum horizontalen Rand 22 der Wannenwand 16, wird an diesem durch einen aus dem Boden 82 des Einlaufblechs 80 herausgebogenen Endwinkel 83 festgelegt sowie mittels einer an den Boden 82 angeschweißten, zum Rand 22 parallelen Blechrippe 84 an der Wannenwand 16 abgestützt.

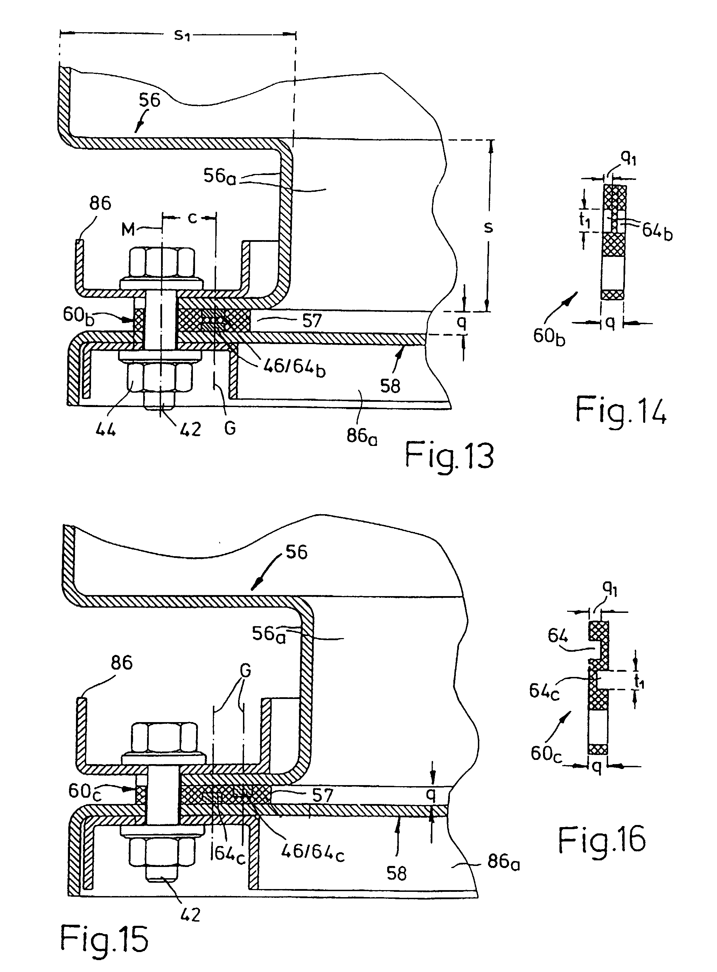

Die Ausführung der Dichtung in Fig. 13, 14 entspricht im Querschnitt etwa jenem der Fig. 5; auch hier verläuft zwischen zwei -- horizontal oder vertikal gerichteten -- parallelen Wandteilen 56, 58 ein Dichtstreifen 60_{b} der Dicke q, der von einem Schraubbolzen 42 durchsetzt ist. Der Wandteil 56 ist im Anschlußbereich zu einem rinnenartigen Abschnitt 56ₐ der Höhe s von 45 mm und der Breite s₁ von 60 mm verformt sowie mit einem U-förmigen Zusatzprofil 86 versehen. Ein weiteres Zusatzprofil 86ₐ liegt dem Wandteil 58 auf.

In beide Oberflächen des Dichtungsstreifens 60_{b} der Dicke q von hier 5 mm ist jeweils eine Nut 64_{b} der Tiefe q₁ von 2 mm eingeformt; beide Nuten 64_{b} fluchten miteinander querschnittlich auf einer gemeinsamen Achse G und sind durch einen dünnen Boden getrennt. Die Achse G läuft in einem radialen Abstand c zur Schraubbolzenachse M. Die Nuten 64_{b} bilden die Prüf- oder Kontrollkammern 46 und dienen zur Dichtigkeitskontrolle; jede Prüfkammer 46 übernimmt die Kontrolle einer der Dichtflächen. Die Nuten 64_{b} werden -- hier nicht dargestellt -- einends an eine Strömungsmittelquelle -- etwa einen Kompressor -- sowie andernends an ein Druckmeßgerät angeschlossen; ein festgestellter Druckabfall weist auf Leckage hin.

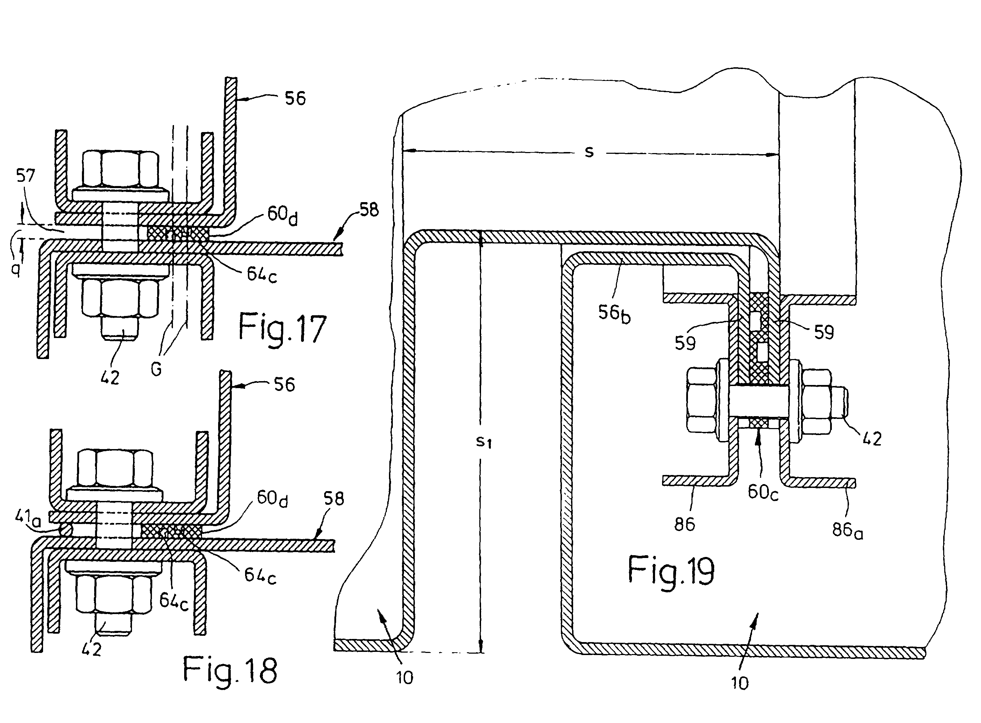

Bei der Ausführung des Dichtstreifens 60_{c} der Dicke q nach Fig. 15, 16 liegen die beiden Nuten 64_{c} der Tiefe q₁ von 3 mm querschnittlich nebeneinander, d.h. ihre Querschnitts-Achsen G stehen parallel in Abstand zueinander. Diese Anordnung erlaubt die Wahl einer geringeren Dicke q von 4 mm. Eine Unterbrechung des Kontroll- oder Prüfraumes 46 durch ein zu starkes Zusammenpressen des Dichtstreifens 60_{c} wird hier besonders gut vermieden. Dies trifft ebenfalls für die Dichtstreifen 60_{d} der Fig. 17, 18 zu, die -- gegenüber Dichtstreifen 60_{b},60_{c} von geringerer Dicke q -- an einer Seite des Schraubbolzens 42 im Spalt 57 verlaufen; auch diese enthalten nebeneinander liegende Paare von Nuten 64_{c}. Gemäß Fig. 18 kann an der dem Dichtstreifen 60_{c} gegenüberliegenden Bolzenseite eine Runddichtung 41ₐ angeordnet sein.

Fig. 19 zeigt zwei Auffangwannen 10, von denen die linke den beschriebenen rinnenartigen Abschnitt 56ₐ anbietet, wohingegen die andere mit einem gegenläufigen Rinnenabschnitt 56_{b} ausgestattet ist; zwischen den jeweiligen -- parallelen -- Endabschnitten 59 der Rinnenabschnitte 56ₐ, 56_{b} ist hier das Dichtelement 60_{c} angebracht.

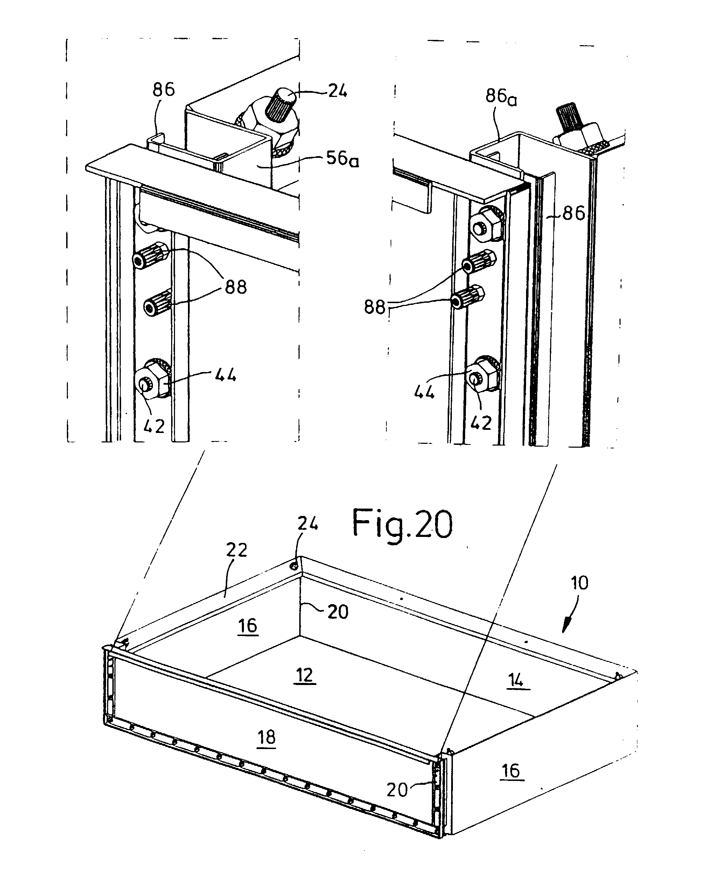

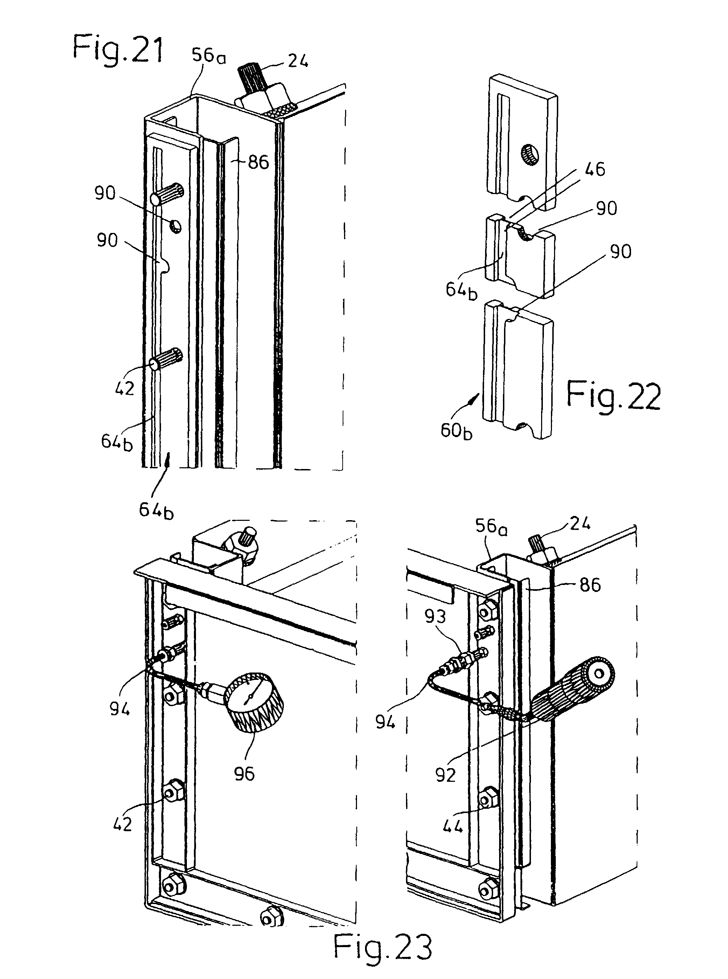

Fig. 20 soll verdeutlichen, daß jede der beiden Kontroll- oder Prüfkammern 46 über Anschlußstecker 88 zugänglich ist. Fig. 21, 22 lassen die für den Anschluß der Kontroll- oder Prüfkammern 46 günstige Aussparungen 90 erkennen.

Den Anschluß einer Luftpumpe als Druckerzeuger 92 mittels eines ein Rückschlagventil 93 enthaltenden Adapterschlauches 94 gibt Fig. 23 wieder. Anderseits ist eine Druckanzeige 96 angeschlossen. Wird der Druckerzeuger 92 betätigt, entsteht in der zu prüfenden Kontrollkammer 46 ein Überdruck von etwa 1,0 bis 2,0 bar. Ist der Druckverlust in 15 min. geringer als 0,1 bar, ist die Dichtung erfolgreich.

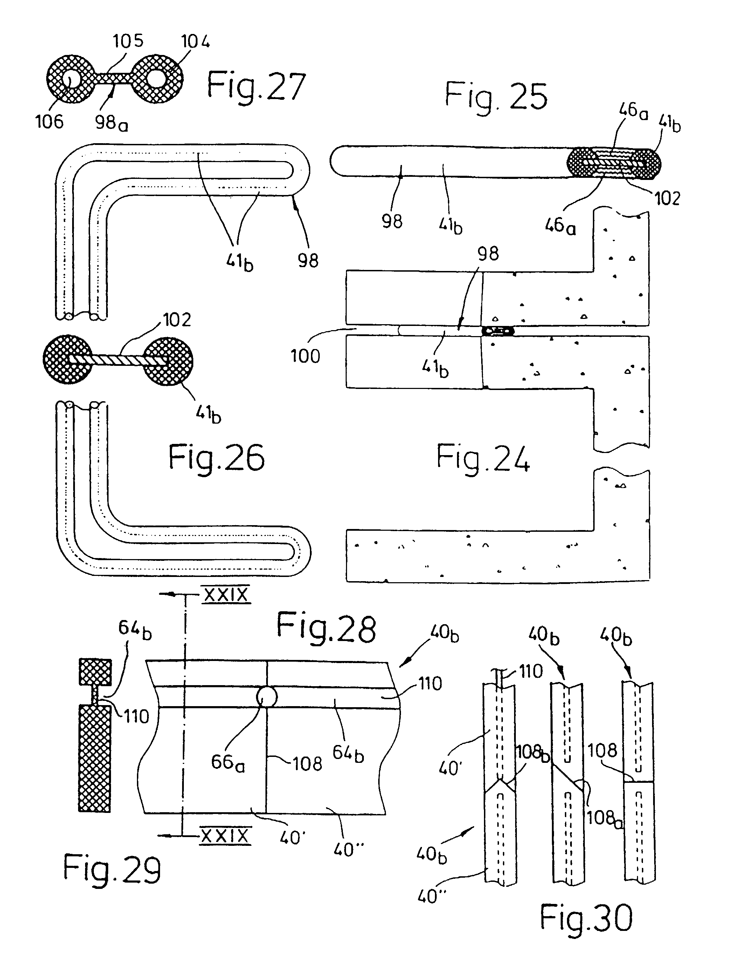

Eine Dichtung 98 mit zwei Kontrollkammern 46ₐ in Betonfugen 100 zeigen die Fig. 24 bis 27. Entweder werden dafür zwei runde Dichtprofile 41_{b} auf einen Blechträger 102 gesteckt oder ein einstückiger Dichtstreifen 98ₐ mit zwei Hohlsträngen 104 und sie verbindendem Steg 105 geformt. Die Innenräume 106 der Hohlstränge 104 können nachträglich mit einem Füllmedium versehen werden, um die Dichtigkeit zu verbessern.

Solche Dichtungen 98, 98ₐ sind gemäß Fig. 24 vor allem für Fugen 100 in Zusammenhang mit Auffangwannen 10 geeignet.

Wird ein Verkleben von Abschnitten einer Dichtung notwendig, so ist eine Prüfung der Dichtheit im Bereich des Klebebereiches erforderlich. Bei dem aus zwei Teilen 40' und 40" am Klebestoß 108 zusammengesetzten Dichtprofil 40_{b} nach Fig. 28, 29 soll eine vollständige Prüfung vom Zustand der Klebestelle ermöglicht werden. Dazu ist im Bereich eines durch einen Steg 110 getrennten Paares von Nuten 64_{b} dieses durch einen Durchbruch 66ₐ verbunden. Wird das eine Ende des beidseits durch Nachbarflächen überdeckte und Kammern bildende Nutpaar an eine Luftquelle 92 und das andere Nutpaarende an einen Druckmesser 96 angeschlossen, detektiert ein Druckabfall Defekte im Klebestoß 108.

Fig. 30 läßt Seitenansichten dreier Dichtprofile 40_{b} mit querschnittlich unterschiedlich gestalteten Klebestößen 108, 108ₐ, 108_{b} -- gerader Stoß, geneigter Stoß, doppelt geneigter Stoß -- erkennen; die zwischen den Nuten 64_{b} verlaufenden Stege 110 sind gestrichelt angedeutet.

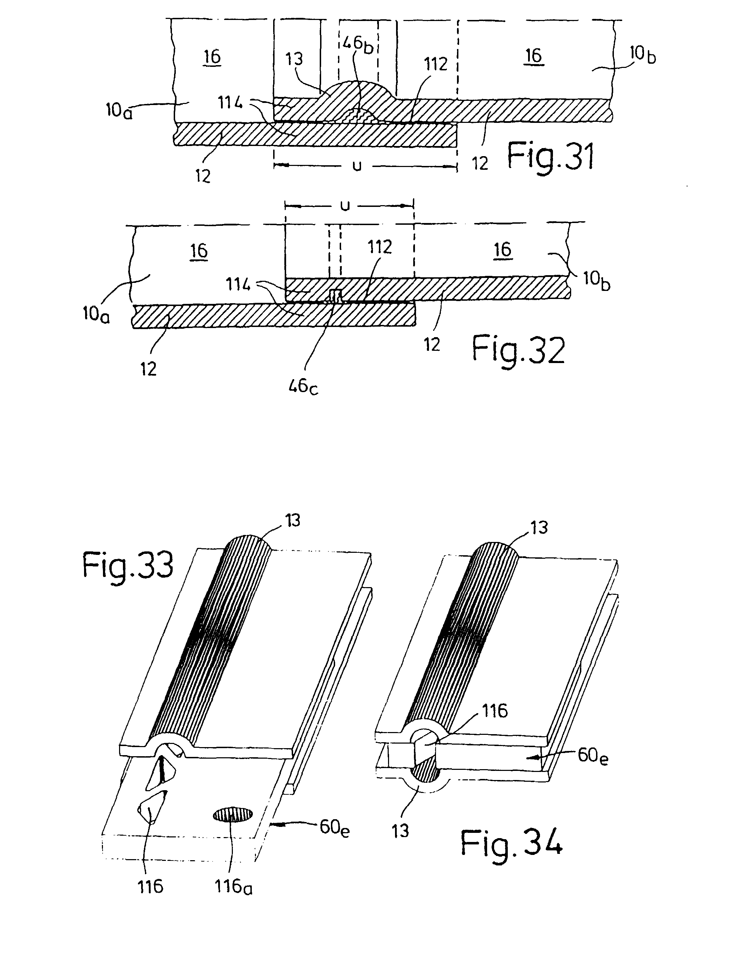

Entsprechend den erörterten Ausbildungen von Dichtungen können beispielsweise auch -- in den Fig. 31, 32 gezeigte -- Klebestellen 112 aus Kunststoff geformter Wannenteile 10ₐ,10_{b} in einem überlappenden Stoßbereich 114 der Länge u gestaltet werden. Die jeweils der Klebestelle 112 zugeordnete Kontrollkammer 46_{b} ist in Fig. 31 durch einen Bodenwulst 13 gebildet, die Kontrollkammer 46_{c} in Fig. 32 nutartig in den Wannenboden 12 eingeformt.

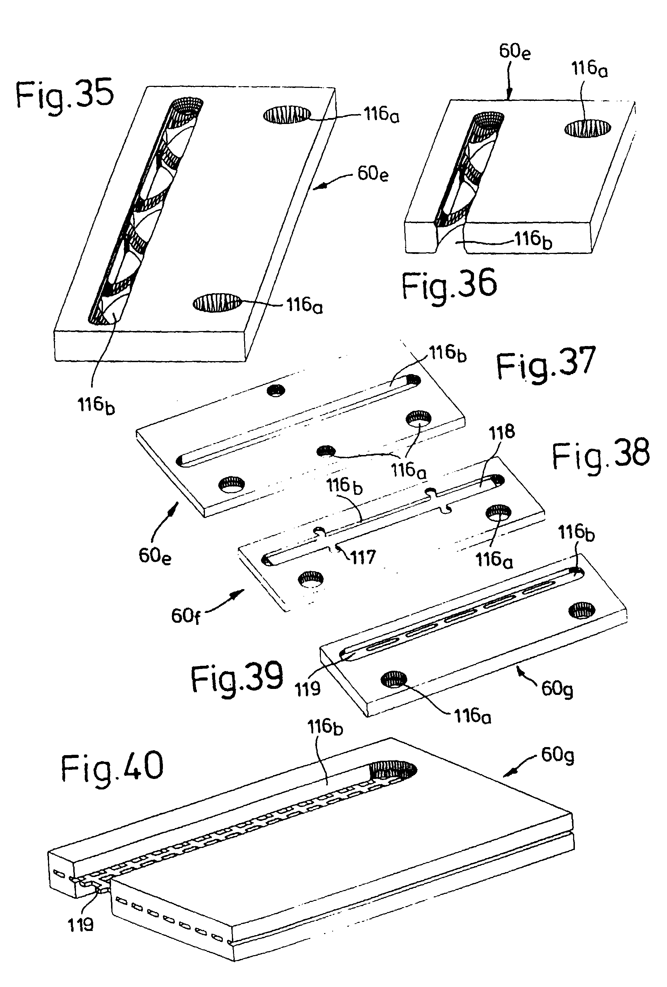

Die Fig. 33 bis 36 zeigen Ausführungen mit zwischengesetzten Dichtstreifen 60ₐ, diese sind mit zusätzlichen polygonen -- hier in Draufsicht trapezförmigen -- Ausnehmungen 116, wenigstens einer kreisförmigen Ausnehmung 116ₐ und/oder mit Längsnuten 116_{b} ausgestattet, wie die Fig. 35 bis 38 erkennen lassen. Eine Längsnut 116_{b} mit von dieser ausgehenden Ausbuchtungen 117 sowie eingelegtem Zwischenboden 118 in Dichtelement 60_{f} deutet Fig. 38 an, eine Längsnut 116_{b} mit diese durchgreifendem Gitter als Teil einer Gittereinlage 119 in Dichtelementen 60_{g} bieten die Fig. 39, 40.

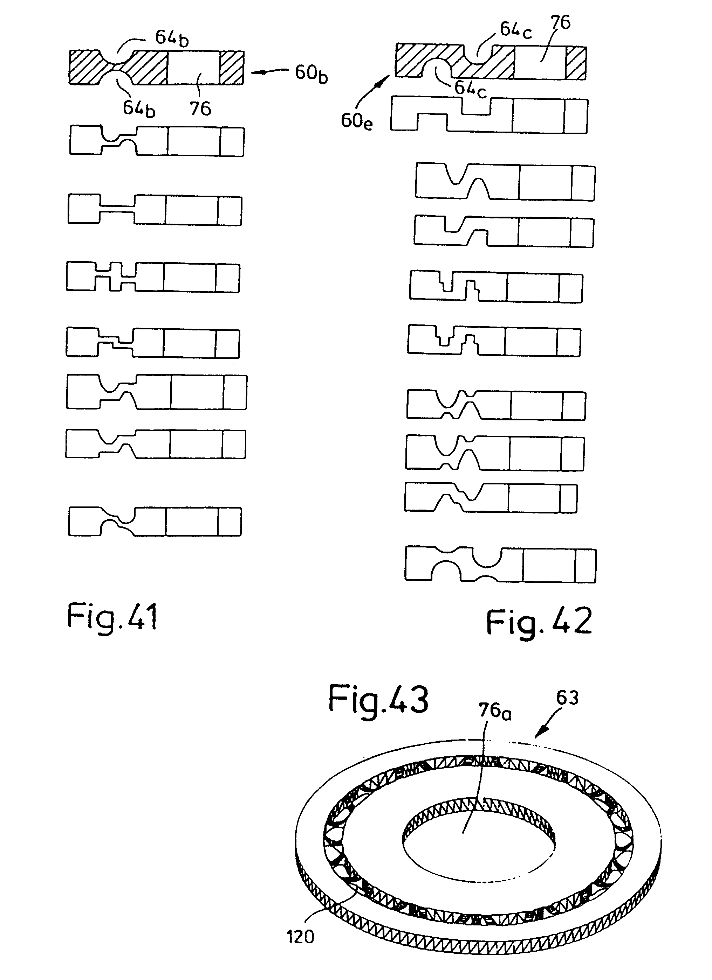

Einen Überblick über Querschnittsformen von Dichtstreifen 60_{b} bzw. 60_{c} zeigen die Fig. 41, 42, wobei jeweils eine Nut dieser Nutpaare 60_{b} 60_{c} der Druckentlastung dienen kann.

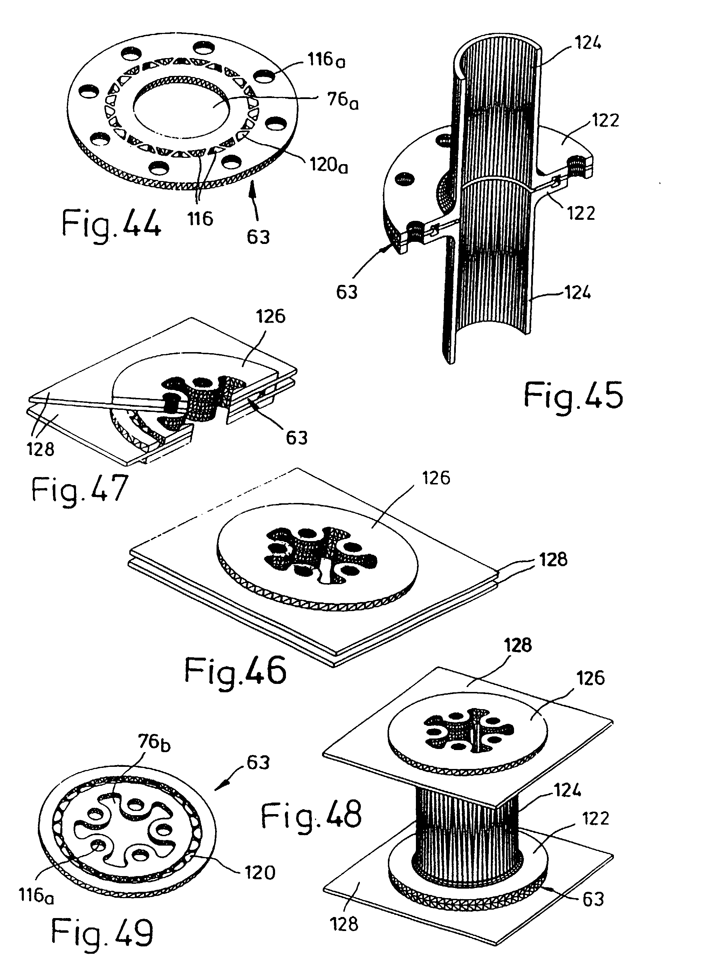

Fig. 43 läßt eine Dichtscheibe 63 kreisförmigen Grundrisses erkennen, die mit einer zentrischen Ausnehmung 76ₐ und einer Ringnut 120 versehen ist. Bei der Ausführung nach Fig. 44 ist statt der Ringnut 120 eine Vielzahl polygoner bzw. trapezförmiger Ausnehmungen 116 in einem Ring 120ₐ angeordnet; letzterer ist von bohrungsartigen Durchbrüchen 116ₐ umgeben.

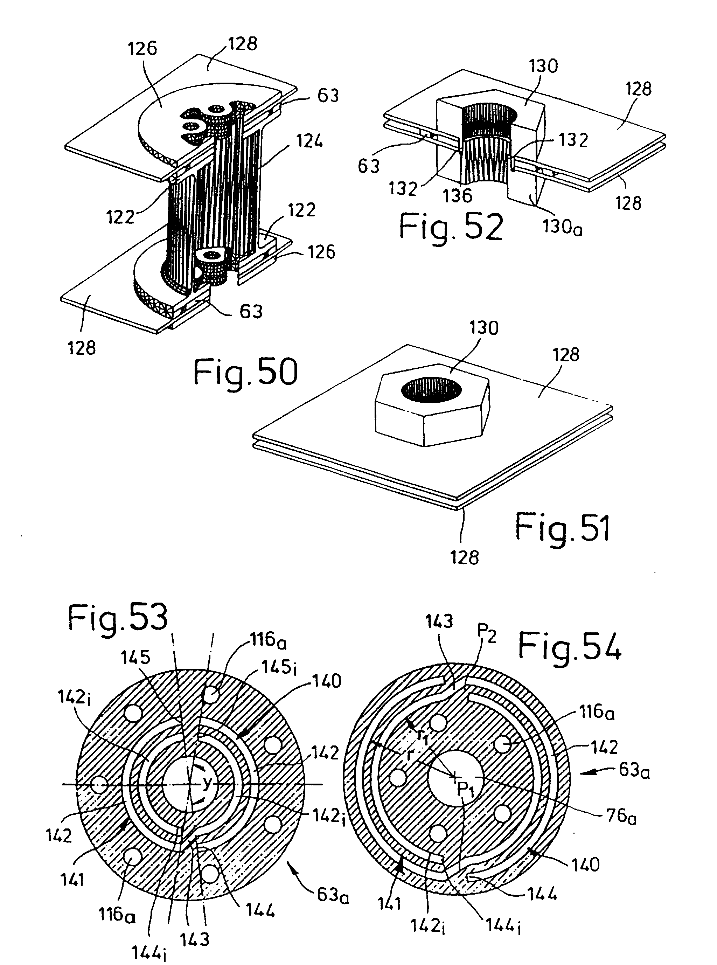

Gemäß Fig. 45 ist die Dichtscheibe 63 zwischen zwei Flansche 122 zweier Rohre 124 eingelegt, gemäß Fig. 46, 47 zwischen zwei jeweils einen Aufsatz 126 tragenden Platten 128. Diese sind in Fig. 48 in Abstand zueinander an einem Rohr 124 vorgesehen. Dieses ist in Fig. 51 geschnitten dargestellt, um die Zuordnung der Flansche 122 und Dichtscheiben 63 besser erkennbar zu machen. Letztere ist mit ihrer Ringnut 120 in Fig. 49 in Schrägsicht zu erkennen.

Die Fig. 51, 52 zeigen zwei Platten 128 mit zentrischen Durchbrüchen für mutterartige Einsätze 130, 130ₐ. Ein Einsatz 130 greift mit einem Gewindekragen 132 in eine Gewindenut 136 des anderen Einsatzes 130ₐ ein, die ihrerseits von einem Gewindekragen 134 begrenzt ist. Die ineinandergreifenden Einsätze 130, 130ₐ halten die Platten 128 unter Zwischenschaltung einer Dichtscheibe 63 zusammen.

Schließlich soll anhand zweier Dichtscheiben 63ₐ der Fig. 53, 54 ein weiteres Prüfsystem vorgestellt werden. In diese Dichtscheiben 63ₐ sind zwischen dem zentrischen Durchbruch 76ₐ und der Scheibenumfangskante 138 jeweils zwei endliche Prüfkanäle 140, 141 eingeformt sowie die erwähnten Ausnehmungen 116ₐ; letztere sind jeweils auf einer Kreiskontur angeordnet, in Fig. 52 nahe der Scheibenumfangskante 138 und in Fig. 53 zwischen dem zentrischen Durchbruch 76ₐ sowie dem inneren der beiden Prüfkanäle 140, 141.

Jeder Prüfkanal 140, 141 weist ein außenliegendes Teilkreisstück 142 des Radius r und ein innenliegendes Teilkreisstück 142ᵢ des kürzeren Radius r₁ auf, die jeweils einen Mittelpunktswinkel y von etwa 160° bestreichen. An einer Seite sind diese beiden Teilkreisstücke 142, 142; des Prüfkanals 140 oder 141 durch einen Schrägabschnitt 143 verbunden, und an der anderen Seite stehen die beiden Kanalenden 144, 144ᵢ bzw. 145, 145ᵢ so in Abstand zueinander, daß der Schrägabschnitt 143 des anderen -- gleichermaßen gestalteten -- Prüfkanals 141 oder 140 dazwischen verlaufen kann.

Im Prüfraum P₁ zwischen den Kanalenden 144 und 144ᵢ wird zur Prüfung ein Überdruck aufgebaut; der Prüfraum P₂ zwischen 145 und 145ᵢ ist offen. Besteht zwischen den Prüfräumen P₁, P₂ eine Verbindung, wird im Prüfraum P₁ kein Überdruck erzeugt.

Der Durchgang von P₂ kann durch eine Strömung zwischen den Kanalenden 145, 145ᵢ sichergestellt werden.

Zum Prüfen des anderen Segments wird in den Prüfraum P₂ ein Überdruck aufgebaut. Der Prüfraum P₁ ist offen. Auch hier wird bei einer vorhandenen Verbindung zwischen den Prüfräumen P₁, P₂ kein Druck erzeugt.

## Patentansprüche

1. Kontrollsystem für zwei einander dicht zugeordnete, voneinander lösbare Teile (10ₙ, 10_{b;} 16, 18; 56, 58; 122; 128) an einem Behältnis für Flüssigkeiten mit zumindest einem an wenigstens eine Bohrung od.dgl. Strömungskanal angeschlossenen, von Dichtelementen (40, 40ₐ, 41; 60, 60ₐ bis 60_{f}, 63; 104) dichtend begrenzten Hohlraum (46, 46ₐ bis 46_{c}), insbesondere Kontrollsystem an einem Auffangbehälter (10) mit einen Behälterboden (12) umgebenden Behälterwänden (14, 16) sowie wenigstens einen dicht mit ihm/ihnen lösbar verbundenen, einen kammerartigen Hohlraum aufweisenden Behälterteil (18, 58), wobei der Hohlraum als Kontrollkammer an eine Strömungsmittelquelle (92) anschließbar und mit dem Strömungsmittel füllbar ausgebildet ist,
dadurch gekennzeichnet,
dass wenigstens zwei im möglichen Strömungsweg (x) für Behälterinhalt in Abstand hintereinander liegende Dichtprofile (40, 40ₐ, 41) vorgesehen sind sowie die Kontrollkammer (46, 46ₐ bis 46_{c}) an eine Drucküberwachungseinrichtung (96) angeschlossen ist.

2. Kontrollsystem nach Anspruch 1, dadurch gekennzeichnet, dass zumindest eines der hintereinander liegenden Dichtprofile (40,40ₐ) von einem den lösbaren Behälterteil (18) und den der Kontrollkammer (46) zugeordneten Abschnitt (16) des Auffangbehälters (10) verbindenden Schraubbolzen (42) od. dgl. Verbindungsorgan durchsetzt ist.

3. Kontrollsystem nach Anspruch 1 oder 2, dadurch gekennzeichnet, dass eines der Dichtungsprofile (40ₐ) durch eine Endkante (33) des der Kontrollkammer (46) zugeordneten Abschnittes (16) an den lösbaren Behälterteil (18) gepreßt ist (Fig. 2, 3), oder dass jedes der Dichtungsprofile (40,40ₐ) zwischen zwei durch eine Schraubverbindung (42,44) zueinandergeführten parallelen Flächen (30,38 bzw. 34ₐ, 19) von Behälterteil (18) bzw. Abschnitt (16) des Auffangbehälters (10) dichtend gehalten ist (Fig. 4).

4. Kontrollsystem nach Anspruch 1, dadurch gekennzeichnet, dass eines von zwei im möglichen Strömungsweg (x) für Behälterinhalt in Abstand hintereinander liegenden Dichtprofile (40,40ₐ) von einer Endkante (33) des lösbaren Behälterteils (18) und deren anderes von einer Endkante (33) des Abschnittes (16) des Auffangbehälters (10) gegen den jeweils anderen Partner (16 bzw. 18) gehalten ist (Fig. 3).

5. Kontrollsystem nach Anspruch 4, dadurch gekennzeichnet, dass die Endkante (33) an einer aus der Fläche des Abschnittes (16,36) gebogenen oder aus der Fläche des lösbaren Behälterteils (18,36) gebogenen Hakenleiste (34) gebildet ist, wobei gegebenenfalls die Hakenleiste (34) von einem Klemmprofil (52) übergriffen und mit diesem an dem jeweils anderen Partner (16 bzw. 18) festgelegt ist, wobei das Klemmprofil (52) bevorzugt durch einen einseitigen Stützsteg (54) in Abstand von seinem Partner (16 bzw. 18) gehalten sowie an diesen durch zumindest eine Schraubverbindung (42,44) angeschlossen ist.

6. Kontrollsystem nach Anspruch 1, dadurch gekennzeichnet, dass die Dichtprofile (41) Rundprofile sind, die durch ein wannenwärtiges Zwischenprofil (55) aus hartem Werkstoff zueinander in Abstand (f₁) paarweise gehalten sind, wobei gegebenenfalls das Zwischenprofil (55) rinnenartig ist und jeder seiner Schenkel einem Rundprofil (41) anliegt und/oder die beiden Rundprofile (41) jeweils außenseitig an ein Klemmprofil (53), insbesondere querschnittlich L-förmiger Ausbildung, angelegt sind, welches von einem Schraubbolzen (42) durchsetzt ist.

7. Kontrollsystem nach einem der Ansprüche 1 bis 6, gekennzeichnet durch zwei Rundprofile (104), die durch ein streifenförmiges Zwischenstück (102, 105) verbunden sind.

8. Kontrollsystem nach wenigstens einem der Ansprüche 1 bis 7, dadurch gekennzeichnet, dass sowohl der lösbare Behälterteil (18) als auch der Abschnitt (16) des Auffangbehälters (10) im Kontrollsystem unter Bildung jeweils einer Anschlußfläche (30) bzw. einer Seitenfläche (36) sowie einer daran anschließenden Flankenfläche (32,32ₐ) bzw. eines Anschlagstreifens (38) zweifach abgekantet ist, wobei die Flankenfläche (32,32ₐ) und die Seitenfläche (36) die Kontrollkammer (46) in Abstand (n) zueinander begrenzen.

9. Kontrollsystem nach Anspruch 1, gekennzeichnet durch einen im Kontrollsystem zwischen parallele Flächen des lösbaren Behälterteils (58) sowie des zugeordneten Abschnitts (56) des Auffangbehälters (10) gelegten Dichtungsstreifen (60,60ₐ, 60_{b}, 60_{c}), in dessen beide Oberflächen (62) zumindest eine Nut (64,64ₐ, 64_{b}, 64_{c}) eingeformt und von dem sie überspannenden Teil (58 bzw. 56) unter Bildung der dichten Kontrollkammer (46) geschlossen ist.

10. Kontrollsystem nach Anspruch 9, dadurch gekennzeichnet, dass seitlich der Längsachse (A) des Dichtungsstreifens (60) in einer Oberfläche (62) jeweils zumindest eine Nut (64) verläuft, die mit einer entsprechenden Nut der anderen Streifenoberfläche durch wenigstens einen Durchbruch (66) verbunden ist (Fig. 6,7), wobei gegebenenfalls das voneinander getrennte Paar von Nuten (64, 64_{b}) des Dichtungsstreifens (60,60_{b}) eine gemeinsame Querschnittsachse (G) aufweist (Fig. 13, 41), und/oder die Nuten (64, 64_{b}) des Paares durch einen schmalen Zwischenboden des Dichtungsstreifens (60,60_{b}) voneinander getrennt sind.

11. Kontrollsystem nach Anspruch 9 oder 10, dadurch gekennzeichnet, dass das voneinander getrennte Paar von Nuten (64_{c}) zueinander versetzte parallele Querschnittsachsen (G) aufweist (Fig. 15, 42), oder dass die Bodenbreite (t) der querschnittlich trapezförmigen Nut (64) etwa einem Zehntel bis einem Viertel der Breite (g) des Dichtungsstreifens (60) entspricht.

12. Kontrollsystem nach Anspruch 10 oder 11, dadurch gekennzeichnet, dass das Nutenpaar (64_{b}, 64_{c}) außerhalb der Querschnittsmitte des Dichtungsstreifens (60_{b}, 60_{c}) vorgesehen ist.

13. Kontrollsystem nach einem der Ansprüche 9 bis 12, dadurch gekennzeichnet, dass der Dichtungsstreifen (60) in der Längsachse (A) außerhalb jener Nuten (64) von Schraubelementen (42) durchsetzt ist.

14. Kontrollsystem nach Anspruch 9, dadurch gekennzeichnet, dass in jede Oberfläche (62) des Dichtungsstreifens (60ₐ) eine fast dessen gesamte Breite (g) einnehmende Nut (64ₐ) eingeformt ist, von deren Nutenboden (70) an Durchbrüchen (76) für die Schraubbolzen (42) Anformungen (72) aufragen, die querschnittlich mit den Nutwänden (78) die Nut parallel zu deren Längsachse (A) fortsetzende Nutkanäle (65) begrenzt (Fig. 9), wobei gegebenenfalls die Oberflächen (62ₐ) der Anformungen (72) mit der Oberfläche (62) des Dichtungsstreifens (60) fluchten.

15. Kontrollsystem nach einem der Ansprüche 1 bis 14, dadurch gekennzeichnet, dass zwei Nuten (64) eines Dichtungsstreifens (60) miteinander durch einen Durchbruch (66) verbunden sind, wobei gegebenenfalls der die beiden Nuten des Dichtungsstreifens verbindende Durchbruch (66) zwischen zwei Anformungen (72) nahe einer Nutwand (78) vorgesehen ist.

16. Kontrollsystem nach einem der Ansprüche 1 bis 15, dadurch gekennzeichnet, dass zumindest in eine Nut (64) eine Bohrung (68) eines zugeordneten Teiles (56) mündet.

17. Kontrollsystem nach Anspruch 10 oder 16, dadurch gekennzeichnet, dass zumindest einem der Durchbrüche (66) des Dichtungsstreifens (60,60ₐ) eine Bohrung (68) in dem den Auffangbehälter (10) begrenzenden Teil (56) des Kontrollsystems zugeordnet ist.

18. Kontrollsystem nach einem der Ansprüche 1 bis 6, dadurch gekennzeichnet, dass das Dichtungsprofil (90, 90ₐ) aus zwei von einem Steg (102, 105) verbundenen Rundprofilen (41_{b}, 104) besteht und jeder der Stegseiten eine Kontrollkammer (46ₐ) zugeordnet ist, wobei gegebenenfalls die Rundprofile (104) als Hohlprofile mit angeformtem Zwischensteg (105) ausgebildet sind.

19. Kontrollsystem nach wenigstens einem der Ansprüche 1 bis 18, dadurch gekennzeichnet, dass ein zwischen zwei stirnseitig aneinanderliegenden Dichtprofilen (40', 40'') verlaufender Klebestoß (108, 108ₐ, 108_{b}) verklebt und in der Klebezone ein beide Profiloberflächen verbindender Durchbruch (66ₐ) angebracht ist (Fig. 28).

20. Kontrollsystem nach Anspruch 9 oder 19, dadurch gekennzeichnet, dass der Durchbruch (66ₐ) im Bereich eines Nutenpaares (64_{b}) mit gemeinsamer Mittelachse (G) verläuft.

21. Kontrollsystem nach wenigstens einem der Ansprüche 1 bis 20, dadurch gekennzeichnet, dass seine einander zugeordneten Teile einander teilweise überlappende Wannenteile (10ₐ, 10_{b}) sind sowie die Kontrollkammer/n (46_{b}, 46_{c}) im Überlappungsbereich angeordnet ist/sind (Fig. 31, 32), wobei gegebenenfalls die Kontrollkammer (46_{b}, 46_{c}) in einen Wannenteil (10_{b}) eingeformt ist.

22. Kontrollsystem nach einem der Ansprüche 1 bis 21, dadurch gekennzeichnet, dass zwischen zwei einander zugeordneten plattenartigen Teilen ein Dichtstreifen (60ₑ bis 60_{g}) mit einer durchgehenden nutartigen Ausnehmung (116_{b}) oder einer Reihe von polygonen oder runden Ausnehmungen (116) eingelegt und den Ausnehmungen wenigstens ein rinnenartiger Bodenwulst (13) der/des plattenartigen Teile/s zugeordnet ist, wobei sich der Rinnenraum zu der/den Ausnehmung/en hin öffnet (Fig. 33 bis 40).

23. Kontrollsystem nach einem der Ansprüche 1 bis 22, dadurch gekennzeichnet, dass die Ausnehmung/en (116_{b}) des Dichtstreifens (60_{f}, 60_{g}) von einem Zwischenboden (118) oder Gittereinlage (119) durchgriffen ist/sind (Fig. 38 bis 40).

24. Kontrollsystem nach wenigstens einem der Ansprüche 1 bis 23, gekennzeichnet durch eine tellerartige Dichtscheibe (63,63ₐ) mit wenigstens einer Ringnut (120;140,141) und/oder einer ringartigen Anordnung (120ₐ) runder oder polygoner Ausnehmungen (Fig. 43,44,49;53,54), wobei gegebenenfalls die Dichtscheibe (63,63ₐ) einen zentrischen Durchbruch (76ₐ) aufweist, wobei gegebenenfalls wenigstens zwei umlaufende Nuten (140,141) jeweils an zumindest einer Stelle unter Bildung eines Prüfraumes (P₁,P₂) unterbrochen sind.

25. Kontrollsystem nach Anspruch 24, dadurch gekennzeichnet, dass jede Nut (140,141) ein außenliegendes Teilkreisstück (142), ein innenliegendes Teilkreisstück (142ᵢ) kürzeren Radius (r₁) und ein jeweils ein Ende der Teilkreise verbindender Schrägabschnitt (143) aufweist, und/oder, dass jede Nut (140,141) aus ihren beiden Teilkreisstücken (142,142ᵢ)eines bevorzugten Mittelpunktswinkels (y) von etwa 160° und dem einen Schrägabschnitt (143) besteht, wobei die beiden anderen einander benachbarten Enden (144,144ᵢ bzw. 145,145ᵢ) der Nuten in Abstand zueinander und beidseits eines der Schrägabschnitte stehen.

26. Kontrollsystem nach Anspruch 24, dadurch gekennzeichnet, dass der Dichtscheibe (63) zumindest einerseits ein Flansch (122) eines Hohlprofils (124) und/oder eine Platte (128) od.dgl. Fläche zugeordnet ist (Fig. 45 bis 48), und/oder dass der zentrische Durchbruch (76ₐ) der Dichtscheibe (63) und die Platte/n (128) durch einen zweiteiligen mutterartigen Einsatz (130, 130ₐ) zusammengefügt ist/sind (Fig. 51, 52), wobei gegebenenfalls ein Teil (130) des mutterartigen Einsatzes mit einem Gewindekragen (132) in eine von einem Gewindekragen des anderen Teiles (130ₐ) begrenzte Gewindenut eingreift.

27. Kontrollsystem nach wenigstens einem der Ansprüche 1 bis 26, dadurch gekennzeichnet, dass die mit ihm dicht zu verbindenden Vorrichtungen Auffangwannen (10) sind, von denen eine mit einem querschnittlich rinnenförmigen Kragenteil einen Profilrand (56ₐ) der anderen Auffangwanne übergreift und der Dichtstreifen (60_{c}) mit Kontrollkammer/n (64) zwischen zwei Endabschnitten (59) der Auffangwanne vorgesehen ist.

28. Kontrollsystem nach wenigstens einem der Ansprüche 1 bis 27, dadurch gekennzeichnet, dass an wenigstens eine Wandung (14,16) des Auffangbehälters (10) eine Einlauffläche als Vergrößerung der Auffangfläche angeschlossen ist, wobei gegebenenfalls die Einlauffläche mit einem Neigungswinkel (z) auf den Behälterrand (22) aufgesteckt ist.

29. Kontrollsystem nach Anspruch 28, dadurch gekennzeichnet, dass die Einlauffläche (80) außerhalb des Behälterrandes (22) mit einem Seitenrand (81) sowie am Behälterrand mit einem Endwinkel (83) versehen und/oder wenigstens ein Stützprofil (85) zwischen der Einlauffläche (80) und der Wandung (16) des Auffangbehälters (10) vorgesehen ist.

## Claims

1. Check system for two portions (10ₙ, 10_{b}; 16, 18; 56, 58; 122; 128) tightly associated with each other and releasable from each other on a receptacle for liquids with at least one cavity (46, 46ₐ to 46_{c}) connected to at least one bore or the like flow channel and sealingly defined by sealing elements (40, 40ₐ, 41; 60, 60ₐ to 60_{f}, 63; 104), in particular check system on a collecting container (10) with container walls (14, 16) surrounding a container bottom (12) as well as at least one container portion (18, 58) tightly connected to the wall(s) releasably and comprising a chamber-like cavity, wherein the cavity is designed as a check chamber so that it can be connected to a fluid source (92) and filled with the fluid, characterised in that at least two sealing profiles (40, 40ₐ, 41) located at a distance one behind the other in the possible flow path (x) for container contents are provided, and the check chamber (46, 46ₐ to 46_{c}) is connected to a pressure monitoring device (96).

2. Check system according to claim 1, characterised in that through at least one of the sealing profiles (40, 40ₐ) located one behind the other passes a screw bolt (42) or the like connecting member connecting the releasable container portion (18) and the section (16) of the collecting container (10) associated with the check chamber (46).

3. Check system according to claim 1 or 2, characterised in that one of the sealing profiles (40ₐ) is pressed against the releasable container portion (18) by an end edge (33) of the section (16) associated with the check chamber (46) (Figs. 2, 3), or in that each of the sealing profiles (40, 40ₐ) is held sealingly by container portion (18) or section (16) of the collecting container (10) between two parallel surfaces (30, 38 or 34ₐ, 19) brought together by a screw connection (42, 44) (Fig. 4).

4. Check system according to claim 1, characterised in that one of two sealing profiles (40, 40ₐ) located at a distance one behind the other in the possible flow path (x) for container contents is held by an end edge (33) of the releasable container portion (18), and the other one is held by an end edge (33) of the section (16) of the collecting container (10), against the other partner (16 or 18) (Fig. 3).

5. Check system according to claim 4, characterised in that the end edge (33) is formed on a hook strip (34) bent out of the surface of the section (16, 36) or bent out of the surface of the releasable container portion (18, 36), wherein if occasion arises the hook strip (34) is overlapped by a clamping profile (52) and fixed with the latter to the other partner (16 or 18), wherein the clamping profile (52) is held preferably by a one-sided support web (54) at a distance from its partner (16 or 18) as well as connected to the latter by at least one screw connection (42, 44).

6. Check system according to claim 1, characterised in that the sealing profiles (41) are round profiles which are held in pairs at a distance (f₁) from each other by a troughward intermediate profile (55) made of hard material, wherein if occasion arises the intermediate profile (55) is channel-like and each of its arms abuts against a round profile (41) and/or the two round profiles (41) are in each case applied on the outside to a clamping profile (53), in particular of L-shaped cross-section, through which passes a screw bolt (42).

7. Check system according to any of claims 1 to 6, characterised by two round profiles (104) which are connected by a strip-like intermediate piece (102, 105).

8. Check system according to one or more of claims 1 to 7, characterised in that both the releasable container portion (18) and the section (16) of the collecting container (10) in the check system is doubly folded, forming in each case a connecting surface (30) or a side surface (36) as well as an adjoining flank surface (32, 32ₐ) or a stop strip (38), wherein the flank surface (32, 32ₐ) and the side surface (36) define the check chamber (46) at a distance (n) from each other.

9. Check system according to claim 1, characterised by a sealing strip (60, 60ₐ, 60_{b}, 60_{c}) which is laid in the check system between parallel surfaces of the releasable container portion (58) and of the associated section (56) of the collecting container (10) and in whose two surfaces (62) at least one groove (64, 64ₐ, 64_{b}, 64_{c}) is formed and closed by the portion (58 or 56) spanning it, forming the sealed check chamber (46).

10. Check system according to claim 9, characterised in that laterally of the longitudinal axis (A) of the sealing strip (60) in a surface (62) runs in each case at least one groove (64) which is connected to a corresponding groove of the other strip surface by at least one aperture (66) (Figs. 6, 7), wherein if occasion arises the pair of grooves (64, 64_{b}) of the sealing strip (60, 60_{b}) which are separated from each other have a common cross-sectional axis (G) (Figs. 13, 41), and/or the grooves (64, 64_{b}) of the pair are separated from each other by a narrow intermediate bottom of the sealing strip (60, 60_{b}).

11. Check system according to claim 9 or 10, characterised in that the pair of grooves (64_{c}) which are separated from each other have offset parallel cross-sectional axes (G) (Figs. 15, 42), or in that the bottom width (t) of the cross-sectionally trapezoidal groove (64) roughly corresponds to one-tenth to one-quarter of the width (g) of the sealing strip (60).

12. Check system according to claim 10 or 11, characterised in that the pair of grooves (64_{b}, 64_{c}) are provided outside the cross-sectional centre of the sealing strip (60_{b}, 60_{c}).

13. Check system according to any of claims 9 to 12, characterised in that screw elements (42) pass through the sealing strip (60) in the longitudinal axis (A) outside those grooves (64).

14. Check system according to claim 9, characterised in that in each surface (62) of the sealing strip (60ₐ) is formed a groove (64ₐ) which occupies nearly the whole width (g) thereof and from whose groove bottom (70) integrally formed portions (72) extend upwards on apertures (76) for the screw bolts (42), which cross-sectionally with the groove walls (78) defines groove channels (65) continuing the groove parallel to the longitudinal axis (A) thereof (Fig. 9), wherein if occasion arises the surfaces (62ₐ) of the integrally formed portions (72) are in line with the surface (62) of the sealing strip (60).

15. Check system according to any of claims 1 to 14, characterised in that two grooves (64) of a sealing strip (60) are connected to each other by an aperture (66), wherein if occasion arises the aperture (66) connecting the two grooves of the sealing strip is provided between two integrally formed portions (72) near a groove wall (78).

16. Check system according to any of claims 1 to 15, characterised in that into at least one groove (64) leads a bore (68) of an associated portion (56).

17. Check system according to claim 10 or 16, characterised in that associated with at least one of the apertures (66) of the sealing strip (60, 60ₐ) is a bore (68) in the portion (56) of the check system defining the collecting container (10) .

18. Check system according to any of claims 1 to 6, characterised in that the sealing profile (90, 90ₐ) consists of two round profiles (41_{b}, 104) connected by a web (102, 105) and associated with each of the web sides is a check chamber (46ₐ), wherein if occasion arises the round profiles (104) are constructed as hollow profiles with integrally formed intermediate web (105).

19. Check system according to one or more of claims 1 to 18, characterised in that an adhesive butt joint (108, 108ₐ, 108_{b}) running between two end-butting sealing profiles (40', 40'') sticks, and in the adhesive zone is made an aperture (66ₐ) connecting the two profile surfaces (Fig. 28).

20. Check system according to claim 9 or 19, characterised in that the aperture (66ₐ) runs in the region of a pair of grooves (64_{b}) with a common centre axis (G).

21. Check system according to one or more of claims 1 to 20, characterised in that its associated portions are trough portions (10ₐ, 10_{b}) partially overlapping each other, and the check chamber(s) (46_{b}, 46_{c}) is/are arranged in the overlap region (Figs. 31, 32), wherein if occasion arises the check chamber (46_{b}, 46_{c}) is formed in a trough portion (10_{b}).

22. Check system according to any of claims 1 to 21, characterised in that between two associated plate-like portions is laid a sealing strip (60ₑ to 60_{g}) with a continuous groove-like recess (116_{b}) or a row of polygonal or round recesses (116), and associated with the recesses is at least one channel-like bottom bead (13) of the plate-like portion(s), wherein the channel space opens towards the recess(es) (Figs. 33 to 40).

23. Check system according to any of claims 1 to 22, characterised in that through the recess(es) (116_{b}) of the sealing strip (60_{f}, 60_{g}) passes an intermediate bottom (118) or grid inlay (119) (Figs. 38 to 40).

24. Check system according to one or more of claims 1 to 23, characterised by a plate-like sealing disc (63, 63ₐ) with at least one annular groove (120; 140, 141) and/or a ring-like arrangement (120ₐ) of round or polygonal recesses (Figs. 43, 44, 49; 53, 54), wherein if occasion arises the sealing disc (63, 63ₐ) comprises a central aperture (76ₐ), wherein if occasion arises at least two peripheral grooves (140, 141) are in each case interrupted at at least one point, forming a test chamber (P₁, P₂).

25. Check system according to claim 24, characterised in that each groove (140, 141) comprises an outer part-circular piece (142), an inner part-circular piece (142ᵢ) of shorter radius (r₁) and a sloping section (143) in each case connecting one end of the part circles, and/or in that each groove (140, 141) consists of its two part-circular pieces (142, 142ᵢ) with a preferred centre angle (y) of approximately 160° and one sloping section (143), wherein the other two ends (144, 144ᵢ or 145, 145ᵢ of the grooves adjacent to each other are at a distance from each other and stand on both sides of one of the sloping sections.

26. Check system according to claim 24, characterised in that associated with the sealing disc (63) is at least on one side a flange (122) of a hollow profile (124) and/or a plate (128) or the like surface (Figs. 45 to 48), and/or in that the central aperture (76ₐ) of the sealing disc (63) and the plate(s) (128) is/are joined together by a two-part nut-like insert (130, 130ₐ) (Figs. 51, 52), wherein if occasion arises a portion (130) of the nut-like insert engages by a threaded collar (132) in a threaded groove defined by a threaded collar of the other portion (130ₐ).

27. Check system according to one or more of claims 1 to 26, characterised in that the apparatuses to be tightly connected to it are collecting troughs (10), one of which overlaps by a cross-sectionally channel-shaped collar portion a profile edge (56ₐ) of the other collecting trough, and the sealing strip (60_{c}) with check chamber(s) (64) is provided between two end sections (59) of the collecting trough.

28. Check system according to one or more of claims 1 to 27, characterised in that connected to at least one wall (14, 16) of the collecting container (10) is an inflow surface as an enlargement of the collecting surface, wherein if occasion arises the inflow surface is fitted with an angle of inclination (z) on the container edge (22).

29. Check system according to claim 28, characterised in that the inflow surface (80) is provided with a side edge (81) outside the container edge (22) and with an end angle (83) at the container edge, and/or at least one supporting profile (85) is provided between the inflow surface (80) and the wall (16) of the collecting container (10).

## Revendications

1. Système de contrôle pour deux pièces (10ₙ, 10_{b}, 16, 18; 56, 58; 122; 128), associées très près l'une de l'autre, désolidarisables l'une de l'autre, sur un récipient destiné à des liquides, avec au moins un espace creux (46, 46ₐ à 46_{c}) délimité de façon étanche par des éléments d'étanchéité (40, 40ₐ, 41; 60, 60ₐ à 60_{f}, 63; 104), raccordé à au moins un alésage ou canal d'écoulement similaire, en particulier un système de contrôle sur un récipient de captage (10) équipé de parois de récipient (14, 16) entourant un fond de récipient (12) ainsi qu'au moins une partie de récipient (18; 58) présentant un espace creux du genre d'une chambre, lui étant reliée de façon désolidarisable et étanche, l'espace creux étant susceptible d'être raccordé à titre de chambre de contrôle à une source de fluide (92) et étant susceptible d'être rempli par le fluide d'écoulement,
caractérisé en ce que
sont prévus au moins deux profilés d'étanchéité (40, 40ₐ, 41), situés l'un derrière l'autre à distance sur le trajet d'écoulement (x) possible pour le contenu du récipient, et en ce que la chambre de contrôle (46, 46ₐ à 46_{c}) est raccordée à un dispositif de surveillance de pression (96).

2. Système de contrôle selon la revendication 1, caractérisé en ce qu'au moins l'un des profilés d'étanchéité (40, 40ₐ, 41), situés l'un derrière l'autre, est traversé par un boulon fileté (42) ou un organe de liaison analogue, reliant la partie de récipient (18) désolidarisable et le tronçon (16), associé à la chambre de contrôle (46), du récipient de captage (10).

3. Système de contrôle selon la revendication 1 ou 2, caractérisé en ce que l'un des profilés d'étanchéité (40ₐ) est pressé, au moyen d'une arête d'extrémité (33) du tronçon (16) associé à la chambre de contrôle (46), sur la partie de récipient (18) désolidarisable (figures 2, 3), ou en ce que chacun des profilés d'étanchéité (40, 40ₐ) est maintenu de façon étanche entre deux surfaces (30, 38 ou 34ₐ, 19) parallèles, guidées l'une vers l'autre par une liaison à vissage (42, 44), et appartenant à la partie de récipient (18) ou au tronçon (16) du récipient de captage (10) (figure 4).

4. Système de contrôle selon la revendication 1, caractérisé en ce que l'un de deux profilés d'étanchéité (40, 40ₐ), situés de façon espacée l'un derrière l'autre sur le trajet d'écoulement (x) possible pour le contenu du récipient, est maintenu par une arête d'extrémité (33) de la partie de récipient (18) désolidarisable, et en ce que l'autre profilé d'étanchéité est maintenu, par une arête d'extrémité (33) du tronçon (16) du récipient de captage (10), chaque fois contre l'autre partenaire (16 ou 18) (figure 3).

5. Système de contrôle selon la revendication 4, caractérisé en ce que l'arête d'extrémité (33) est constituée sur une bande formant crochet (34) repliée à partir de la surface du tronçon (16, 36) ou repliée à partir de la surface de la partie de récipient désolidarisable (18, 36), en ce que le cas échéant, la bande formant crochet (34) est entourée par un profilé de serrage (52) et est fixée à celui-ci chaque fois sur l'autre partenaire (16 ou 18), et en ce que le profilé de pincement (52) est maintenu, de préférence à distance de son partenaire (16 ou 18), par une barrette d'appui (54) prévue d'un côté et est raccordé à son partenaire par au moins une liaison vissée (42, 44).

6. Système de contrôle selon la revendication 1, caractérisé en ce que les profilés d'étanchéité (41) sont des profilés ronds, qui sont maintenus par paires à distance (fl) l'un de l'autre au moyen d'un profilé intermédiaire (55) du genre d'un berceau, réalisé en matériau dur, en ce que le cas échéant le profilé intermédiaire (55) est du genre d'une goulotte, et chacune de ses branches s'appuie sur un profilé rond (41) et/ou en ce que les deux profilés ronds (41) sont respectivement appliqués du côté extérieur sur un profilé de pincement (53), en particulier d'une configuration à section transversale en forme de L, qui est traversée par un boulon fileté (42).

7. Système de contrôle selon l'une des revendications 1 à 6, caractérisé par deux profilés ronds (104), reliés par une pièce intermédiaire (102, 105) en forme de bande.

8. Système de contrôle selon l'une au moins l'une des revendications 1 à 6, caractérisé en ce que tant la partie de récipient (18) désolidarisable, qu'également le tronçon (16) du récipient de captage (10), dans le système de contrôle avec formation chaque fois d'une surface de raccordement (30) ou d'une surface latérale (36) ainsi que d'une surface de flanc (32, 32ₐ) s'y raccordant, ou d'une bande de butée (18), est replié à deux reprises, et en ce que la surface de flanc (32, 32ₐ) et la surface latérale (36) délimitent mutuellement la chambre de contrôle (46) selon l'espacement (n).

9. Système de contrôle selon la revendication 1, caractérisé par une bande d'étanchéité (60, 60ₐ, 60_{b}, 60_{c}), placée, dans le système de contrôle, entre des surfaces parallèles de la partie de récipient (58) désolidarisable ainsi que du tronçon (56) associé du récipient de captage (10), bande sur les deux surfaces (62) de laquelle est ménagée au moins une rainure (64 à 64a, 64b, 64c) qui est fermée par la partie (58 ou 56) la recouvrant, en formant la chambre de contrôle (46) étanche.

10. Système de contrôle selon la revendication 9, caractérisé en ce que sur le côté de l'axe longitudinal (A) de la bande d'étanchéité (60) s'étend dans une surface (62) chaque fois au moins une rainure (64) qui est reliée à une rainure correspondante de l'autre surface de bande, par au moins une traversée (66) (figures 6, 7), en ce que le cas échéant la paire de rainures (64, 64b) séparées l'une de l'autre de la bande d'étanchéité (60, 60b) présentent un axe de section transversale (G) commun (figures 13, 41), et/ou les rainures (64, 64b) de la paire sont séparées l'une de l'autre par un fond intermédiaire étroit de la bande d'étanchéité (60, 60b).

11. Système de contrôle selon la revendication 9 ou 10, caractérisé en ce que la paire de rainures (64c), séparées l'une de l'autre, présentent des axes de section transversale (G) parallèles, décalés l'un par rapport à l'autre (figures 15, 42), ou en ce que la largeur de fond (t) de la rainure (64) à section transversale trapézoïdale correspond à peu près à un dixième jusqu'à un quart de la largeur (g) de la bande d'étanchéité (60).

12. Système de contrôle selon la revendication 10 ou 11, caractérisé en ce que la paire de rainures (64_{b}, 64_{c}) est prévue hors du centre de la section transversale de la bande d'étanchéité (60_{b}, 60_{c}).

13. Système de contrôle selon l'une des revendications 9 à 12, caractérisé en ce que la bande d'étanchéité (60) est traversée dans l'axe longitudinal (A) à l'extérieur de chaque rainure (64), par des éléments filetés (42).

14. Système de contrôle selon la revendication 9, caractérisé en ce que, dans chaque surface (62) de la bande d'étanchéité (60a), est creusée une rainure (64a) qui fait presque la totalité de sa largeur (g), rainure dont les fonds de rainure (70) à des traversées (76) destinées au boulon fileté (42), présentent en saillie des bombements (72) qui délimitent en section transversale avec les parois de rainure (78) la rainure parallèlement à des canaux de rainure (65) prolongeant son axe longitudinal (A) (figure 9), en ce que le cas échéant les surfaces (62ₐ) des bombements (72) sont alignées avec la surface (62) de la bande d'étanchéité (60).

15. Système de contrôle selon l'une des revendications 1 à 14, caractérisé en ce que deux rainures (64) d'une bande d'étanchéité (60) sont reliées ensemble par une traversée (68), en ce que le cas échéant la traversée (66) reliant les deux rainures de la bande d'étanchéité est prévue entre deux bombements (72), près d'une paroi de rainure (78).

16. Système de contrôle selon l'une des revendications 1 à 15, caractérisé en ce qu'au moins dans une rainure (64) débouche un alésage (68) d'une partie (56) associée.

17. Système de contrôle selon la revendication 10 ou 16, caractérisé en ce qu'au moins à l'une des traversées (66) de la bande d'étanchéité (60, 60ₐ) est associé un alésage (68) ménagé dans la partie (56), délimitant le récipient de captage (10) du système de contrôle.

18. Système de contrôle selon l'une des revendications 1 à 6, caractérisé en ce que le profilé d'étanchéité (90, 90ₐ) est constitué de deux profilés ronds (41_{b}, 104) reliés par une barrette (102, 105), et en ce qu'à chacune des faces de la barrette est associée une chambre de contrôle (46ₐ), en ce que le cas échéant les profilés ronds (104) sont réalisés sous la forme de profilés creux ayant une barrette intermédiaire (105) moulée.

19. Système de contrôle selon au moins l'une des revendications 1 à 18, caractérisé en ce qu'un joint adhésif continu (108, 108ₐ, 108_{b}), est collé entre deux profilés d'étanchéité (40', 40") s'étendant frontalement l'un derrière l'autre, et en ce que, dans la zone de collage, est placée une traversée (66ₐ) reliant les deux surfaces de profilé (figure 28).

20. Système de contrôle selon la revendication 9 ou 19, caractérisé en ce que la traversée (66ₐ) s'étend dans la zone d'une paire de rainures (64_{b}) ayant un axe médian (G) commun.

21. Système de contrôle selon au moins l'une des revendications 1 à 20, caractérisé en ce que ses deux parties associées sont des parties en berceau (10ₐ, 10_{b}) se chevauchant partiellement et en ce que la ou les chambre(s) de contrôle (46_{b}, 46_{c}) est/sont disposée(s) dans la zone de chevauchement (figures 31, 32), et en ce que le cas échéant la chambre de contrôle (46_{b}, 46_{c}) est ménagée dans une partie de berceau (10_{b}).

22. Système de contrôle selon l'une des revendications 1 à 21, caractérisé en ce qu'entre deux pièces en forme de plaques et associées l'une à l'autre, est insérée une bande d'étanchéité (60ₑ à 60_{g}) ayant un évidemment traversant en forme de rainure (116_{b}), ou bien une série d'évidements (116) polygonaux ou ronds, et en ce qu'aux évidements est associé au moins un bourrelet de fond (13) du genre d'une rigole des/de la pièce(s) en forme de plaque, et en ce que l'espace de goulotte débouche sur le ou les évidement(s) (figure 33 à 40).

23. Système de contrôle selon l'une des revendications 1 à 22, caractérisé en ce que le ou les évidement(s) (116_{b}) de la bande d'étanchéité (60_{f}, 60_{g}) est/sont traversé(s) par un fond intermédiaire (118) ou un insert grillagé (119) (figures 38 à 40).

24. Système de contrôle selon au moins l'une des revendications 1 à 23, caractérisé par une rondelle d'étanchéité (63, 63a) du genre d'un plateau, ayant au moins une rainure annulaire (120; 140, 141) et/ou un agencement du genre d'un anneau (120ₐ) d'évidements ronds ou polygonaux (figures 43, 44, 49; 53, 54), en ce que le cas échéant la rondelle d'étanchéité (63, 63ₐ) présente une traversée (76ₐ) centrale,et en ce que le cas échéant au moins deux rainures (141, 142) de pourtour sont interrompues chacune en au moins un emplacement en formant un espace d'essai ou de contrôle (P₁, P₂).

25. Système de contrôle selon la revendication 24, caractérisé en ce que chaque rainure (140, 141) présente une pièce en cercle partiel (142) extérieure, une pièce en cercle partiel (142ᵢ) intérieure, de rayon (r₁) plus court, et un tronçon oblique (143) reliant chaque fois une extrémité des cercles partiels, et/ou en ce que chaque rainure (141, 142) est constituée de ses deux pièces en cercle partiel (142, 142ᵢ) d'un angle au centre (y) préféré d'environ 160° et d'un tronçon oblique (143), et en ce que les deux autres extrémités (144, 144ᵢ, ou 145, 145ᵢ), voisines entre elles, des rainures sont placées à distance l'une de l'autre et des deux côtés d'un des tronçons obliques.

26. Système de contrôle selon la revendication 24, caractérisé en ce qu'à la rondelle d'étanchéité (63) est associée au moins sur un côté une bride (122) d'un profilé creux (124) et/ou une plaque (128) ou surface analogue (figures 45 à 48), et/ou en ce que la traversée centrale (76ₐ) de la rondelle d'étanchéité (63) et la ou les plaque(s) (128) est/sont assemblée(s) au moyen d'un insert (130, 130ₐ) du genre d'un écrou, réalisé en deux parties (figures 51, 52), en ce que le cas échéant une partie (130) de l'insert du genre d'un écrou se visse, par une collerette filetée (132), dans une rainure filetée, délimitée par une collerette filetée de l'autre partie (130ₐ).

27. Système de contrôle selon au moins l'une des revendications 1 à 26, caractérisé en ce que les dispositifs à relier ensemble de façon étanche sont des cuves de captage ou bacs de rétention (10), dont l'une par une partie formant collerette en forme de goulotte en section transversale, un bord de profilé (56ₐ) de l'autre cuve de captage et en ce que la bande d'étanchéité (60c) avec une ou des chambres de contrôle (64) est prévue entre deux tronçons d'extrémité (59) de la cuve de captage.

28. Système de contrôle selon au moins l'une des revendications 1 à 27, caractérisé en ce que, sur au moins une paroi (14, 16) du récipient de captage (10), est raccordée une surface d'introduction réalisée sous la forme d'un agrandissement de la surface de captage, et en ce que le cas échéant la surface d'introduction ayant un angle d'inclinaison (z) est enfilée sur le bord de récipient (22).

29. Système de contrôle selon la revendication 28, caractérisé en ce que la surface d'introduction (80) est dotée à l'extérieur du bord de récipient (22) d'une bordure latérale (81), ainsi que, sur le bord de récipient, d'une cornière d'extrémité (83) et/ou en ce qu'au moins un profilé d'appui (85) est prévu entre la surface d'introduction (80) et la paroi (16) du récipient de captage (10).
